# EUROPEAN PATENT APPLICATION

(11) **EP 4 407 951 A1**
(43) Date of publication of application: **31.07.2024**
(21) Application number: 22897642.9
(22) Date of filing: 14.11.2022
(51) Int. Cl.: H04L 65/80, H04L 65/60, G06N 3/04, G06N 3/08

(54) **DATA TRANSMISSION METHOD AND APPARATUS**

(30) Priority: 23.11.2021 CN 202111392614
(71) Applicant: Huawei Technologies Co., Ltd., Shenzhen, Guangdong 518129 (CN)
(72) Inventor: CAO, Youlong, Shenzhen, Guangdong 518129 (CN); LIAO, Shuri, Shenzhen, Guangdong 518129 (CN); CHEN, Erkai, Shenzhen, Guangdong 518129 (CN); DOU, Shengyue, Shenzhen, Guangdong 518129 (CN); ZHOU, Guohua, Shenzhen, Guangdong 518129 (CN); WANG, Shaobo, Shenzhen, Guangdong 518129 (CN)
(74) Representative: Pfenning, Meinig & Partner mbB
(86) International application number: PCT/CN2022/131750
(87) International publication number: WO 2023/093559

(57) **Abstract**

This application provides a data transmission method and apparatus. The method includes: receiving a first data packet and a first neural network data packet, where the first neural network data packet is used to carry neural network parameter information, the neural network parameter information is used to process data of a first video frame data packet, the first data packet includes first identification information, the first neural network data packet includes second identification information, and the first identification information and the second identification information each indicate a correspondence between the first data packet and the first neural network data packet; and sending the first data packet and the first neural network data packet based on the first identification information and the second identification information. In this way, the correspondence between the first data packet and the first neural network data packet can be determined based on the identification information, so that data transmission is flexibly performed, and user experience is improved.

## Description

This application claims priority to Chinese Patent Application No. 202111392614.5, filed with the China National Intellectual Property Administration on November 23, 2021 and entitled "DATA TRANSMISSION METHOD AND APPARATUS", which is incorporated herein by reference in its entirety.

### TECHNICAL FIELD

Embodiments of this application relate to the communication field, and more specifically, to a data transmission method and apparatus.

### BACKGROUND

In recent years, with continuous progress and improvement of extended reality (extended reality, XR) technologies, related industries have developed vigorously. Nowadays, the extended reality technology has entered various fields, for example, education, entertainment, military affairs, medical care, environmental protection, transportation, and public health, closely related to production and life of people. Extended reality is a general term for various reality-related technologies, and specifically includes virtual reality (virtual reality, VR), augmented reality (augmented reality, AR), and mixed reality (mixed reality, MR). Rendering is performed on vision and hearing to provide a user with "immersive experience" in virtual and real scenarios.

In the XR technology, a high-resolution image/video is provided to improve user experience. A super resolution (super resolution, SR) technology can be used to convert a low-resolution image into a high-resolution image. The SR technology is a technology that improves resolution of an original image/video by using hardware or software.

Currently, a neural network-based SR technology has attracted wide attention because of its great image restoration effect. In a transmission process of an XR video, if a neural network data packet or a low-definition video data packet is lost or incorrect, a customer cannot watch a high-definition video corresponding to packet loss data, or even cannot watch the video, thereby affecting user experience.

### SUMMARY

This application provides a data transmission method and apparatus, to flexibly transmit data and improve user experience.

According to a first aspect, a data transmission method is provided. The method may be performed by an access network device, may be performed by a component (for example, a processor, a chip, or a chip system) of the access network device, or may be implemented by a logical module or software that can implement all or some functions of the access network device. The method includes: receiving a first video frame data packet and a first neural network data packet, where the first neural network data packet is used to carry neural network parameter information, the neural network parameter information is used to process data of the first video frame data packet, the first video frame data packet includes first identification information, the first neural network data packet includes second identification information, and the first identification information and the second identification information each indicate a correspondence between the first video frame data packet and the first neural network data packet; and sending the first video frame data packet and the first neural network data packet based on the first identification information and the second identification information.

That the first identification information and the second identification information each indicates a correspondence between the first video frame data packet and the first neural network data packet may be understood as that the first identification information and the second identification information each indicate a specific first neural network data packet whose parameter information may be used to restore data of a specific first video frame data packet. Alternatively, it may be understood as that the first identification information and the second identification information each may indicate a grouping status of the first video frame data packet and a grouping status of the first neural network data packet, and data of a first video frame data packet may be restored based on parameter information in a first neural network data packet in a same group.

In the data transmission solution provided in this application, the correspondence between the two types of data packets is indicated in the first neural network data packet and the first video frame data packet. In this way, data can be flexibly transmitted based on the correspondence, thereby improving user experience.

For example, in each group, first identification information in a first video frame data packet and second identification information in a first neural network data packet may be represented by a same number.

Optionally, in each group, the first identification information in the first video frame data packet and the second identification information in the first neural network data packet may also be represented by different numbers.

In some possible implementations, the first video frame data packet includes first identification information, and the first identification information may indicate a correspondence between the first video frame data packet and the first neural network data packet.

For example, present information in a first neural network data packet in each group, for example, a sequence number of a general packet radio service tunneling protocol-user plane (general packet radio service tunneling protocol-user plane, GTP-U) data packet, may be placed in first identification information in a first video frame data packet in a same group. The first identification information may indicate the correspondence between the first video frame data packet and the first neural network data packet, that is, may indicate a specific first neural network data packet whose parameter information may be used to restore data of a specific first video frame data packet.

In some possible implementations, the first neural network data packet includes second identification information, and the second identification information may also indicate a correspondence between the first video frame data packet and the first neural network data packet.

For example, present information in a first video frame data packet in each group, for example, a sequence number of a GTP-U data packet, may be placed in second identification information in a first neural network data packet. The second identification information may indicate the correspondence between the first video frame data packet and the first neural network data packet, that is, may indicate a specific first neural network data packet whose parameter information may be used to restore data of a specific first video frame data packet.

With reference to the first aspect, in some implementations of the first aspect, the first identification information indicates a group of the first video frame data packet.

According to the data transmission solution provided in this embodiment of this application, the group of the first video frame data packet can be determined based on the first identification information, so that the correspondence between the first video frame data packet and the first neural network data packet can be determined.

With reference to the first aspect, in some implementations of the first aspect, the second identification information indicates a group of the first neural network data packet.

According to the data transmission solution provided in this embodiment of this application, the group of the first neural network data packet can be determined based on the second identification information, so that the correspondence between the first neural network data packet and the first video frame data packet can be determined.

With reference to the first aspect, in some implementations of the first aspect, the first video frame data packet further includes first type information, and the first type information indicates a type of the first video frame data packet; and the sending the first video frame data packet and the first neural network data packet based on the first identification information and the second identification information includes: sending the first video frame data packet and the first neural network data packet based on the first identification information, the second identification information, and the first type information.

In the data transmission solution provided in this embodiment of this application, the first video frame data packet further includes first type information indicating a type of a video frame data packet. In this way, which data packet whose type is the video frame data packet may be further determined based on the first type information, so that data transmission can be flexibly performed based on the type of the data packet, thereby ensuring user experience.

For example, the first type information may be represented by a number. For example, the first type information in the first video frame data packet may be represented by a number 1, to indicate that a type of a data packet whose type information is 1 is a video frame data packet.

For example, the first type information may be represented by a letter. For example, the first type information in the first video frame data packet may be represented by a letter A, to indicate that a type of a data packet whose type information is A is a video frame data packet.

With reference to the first aspect, in some implementations of the first aspect, the first neural network data packet further includes second type information, and the second type information indicates a type of the first neural network data packet; and the sending the first video frame data packet and the first neural network data packet based on the first identification information and the second identification information includes: sending the first video frame data packet and the first neural network data packet based on the first identification information, the second identification information, and the second type information.

In the data transmission solution provided in this embodiment of this application, the first neural network data packet further includes second identification information indicating a type of a neural network data packet. In this way, which data packet whose type is the neural network data packet may be further determined based on the second type information, so that data transmission can be flexibly performed based on the type of the data packet, thereby improving user experience.

For example, the second type information may be represented by a number. For example, the second type information in the first neural network data packet may be represented by a number 2, to indicate that a type of a data packet whose type information is 2 is a neural network data packet.

For example, the second type information may be represented by a letter. For example, the second type information in the first neural network data packet may be represented by a letter B, to indicate that a type of a data packet whose type information is B is a neural network data packet.

With reference to the first aspect, in some implementations of the first aspect, the first video frame data packet is carried on a first quality of service (quality of service, QoS) flow, and the first neural network data packet is carried on a second QoS flow.

In the data transmission solution provided in this application, a video frame data packet and a neural network data packet may be further carried on two QoS flows respectively. In a data transmission process, different scheduling priorities may be implemented for the video frame data packet and the neural network data packet, so that a transmission policy can be flexibly determined.

It should be understood that a session management function (session management function, SMF) network element is responsible for controlling the QoS flow.

For example, the SMF may determine QoS configuration information based on a QoS flow configuration request from a server, where the QoS configuration information indicates that the first QoS flow is used to carry the video frame data packet, and the second QoS flow is used to carry the neural network data packet.

With reference to the first aspect, in some implementations of the first aspect, the sending the first video frame data packet and the first neural network data packet based on the first identification information and the second identification information includes: mapping, to a radio resource based on the first identification information and the second identification information, the data packets carried on the first QoS flow and the second QoS flow, and transmitting the data packets.

In the data transmission solution provided in this embodiment of this application, the correspondence between the first video frame data packet and the first neural network data packet may be determined based on the first identification information and the second identification information, so that the first video frame data packet and the first neural network data packet are mapped to a radio resource based on the correspondence for transmission.

For example, the access network device may map the data packets carried on the first QoS flow and the second QoS flow to different code block groups (code block group, CBG) of a physical layer transmission block (transmission block, TB) for transmission. For example, there are five groups of to-be-sent data packets of an XR video, and each group includes one video frame data packet and one neural network data packet. The access network device may separately preferentially map the five video frame data packets carried on the first QoS flow to one or more CBGs for preferential transmission, and then separately map the five neural network data packets of the five groups and that are carried on the second QoS flow to other available CBGs for transmission. In this way, data transmission can be flexibly performed, and basic user experience can be ensured.

With reference to the first aspect, in some implementations of the first aspect, the first video frame data packet and the first neural network data packet are general packet radio service tunneling protocol-user plane GTP-U data packets, and the first identification information and the second identification information are located in a GTP-U protocol of a packet header of the GTP-U data packet.

According to the data transmission solution provided in this embodiment of this application, the first identification information and the second identification information each may be added to the GTP-U protocol of the packet header of the GTP-U data packet, so that the access network device identifies and reads the first identification information and the second identification information, to determine the correspondence between the first video frame data packet and the first neural network data packet.

With reference to the first aspect, in some implementations of the first aspect, the first video frame data packet and the first neural network data packet are general packet radio service tunneling protocol-user plane GTP-U data packets, and the first type information and the second type information are located in a GTP-U protocol of a packet header of the GTP-U data packet.

According to the data transmission solution provided in this embodiment of this application, the first type information and the second type information each may be added to the GTP-U protocol of the packet header of the GTP-U data packet, so that the access network device can identify and read the first type information and the second type information, to determine the type of the first video frame data packet and the type of the first neural network data packet. In this way, data transmission can be selectively performed based on the type of the data packet, thereby improving flexibility of data transmission.

According to a second aspect, a data transmission method is provided. The method may be performed by a user plane function (user plane function, UPF) network element, may be performed by a component (for example, a processor, a chip, or a chip system) of the UPF network element, or may be implemented by a logical module or software that can implement all or some functions of the UPF network element. The method includes: receiving a second video frame data packet and a second neural network data packet of an XR video, where the second video frame data packet and the second neural network data packet each include first information, and the first information indicates a type and a group of the second video frame data packet and a type and a group of the second neural network data packet; generating a first video frame data packet and a first neural network data packet of the XR video, where the first neural network data packet is used to carry neural network parameter information, the neural network parameter information is used to process data of the first video frame data packet, the first video frame data packet includes first identification information, the first neural network data packet includes second identification information, the first identification information and the second identification information each indicate a correspondence between the first video frame data packet and the first neural network data packet, and the first identification information and the second identification information are determined based on the first information; and sending the first video frame data packet and the first neural network data packet.

In the data transmission solution provided in this application, the correspondence between the two types of data packets is indicated in the first neural network data packet and the first video frame data packet. In this way, data can be flexibly transmitted based on the correspondence, thereby improving user experience.

For example, in each group, first identification information in a first video frame data packet and second identification information in a first neural network data packet may be represented by a same number.

Optionally, in each group, the first identification information in the first video frame data packet and the second identification information in the first neural network data packet may also be represented by different numbers.

In some possible implementations, the first data packet includes first identification information, and the first identification information may indicate a correspondence between the first video frame data packet and the first neural network data packet.

For example, present information in a first neural network data packet in each group, for example, a sequence number of a GTP-U data packet, may be placed in first identification information in a first data packet in a same group. The first identification information may indicate the correspondence between the first video frame data packet and the first neural network data packet, that is, may indicate a specific first neural network data packet whose parameter information may be used to restore data of a specific first video frame data packet.

In some possible implementations, the first neural network data packet includes second identification information, and the second identification information may also indicate a correspondence between the first video frame data packet and the first neural network data packet.

For example, present information in a first video frame data packet in each group, for example, a sequence number of a GTP-U data packet, may be placed in second identification information in a first neural network data packet. The second identification information may indicate the correspondence between the first video frame data packet and the first neural network data packet, that is, may indicate a specific first neural network data packet whose parameter information may be used to restore data of a specific video frame data packet.

With reference to the second aspect, in some implementations of the second aspect, the first identification information indicates a group of the first video frame data packet.

With reference to the second aspect, in some implementations of the second aspect, the second identification information indicates a group of the first neural network data packet.

With reference to the second aspect, in some implementations of the second aspect, the first video frame data packet further includes first type information, and the first type information indicates a type of the first video frame data packet.

For example, the first type information may be represented by a number. For example, the first type information in the first video frame data packet may be represented by a number 1, to indicate that a type of a data packet whose type information is 1 is a video frame data packet.

For example, the first type information may be represented by a letter. For example, the first type information in the first video frame data packet may be represented by a letter A, to indicate that a type of a data packet whose type information is A is a video frame data packet.

With reference to the second aspect, in some implementations of the second aspect, the first neural network data packet further includes second type information, and the second type information indicates a type of the first neural network data packet.

For example, the second type information may be represented by a number. For example, the second type information in the first neural network data packet may be represented by a number 2, to indicate that a type of a data packet whose type information is 2 is a neural network data packet.

For example, the second type information may be represented by a letter. For example, the second type information in the first neural network data packet may be represented by a letter B, to indicate that a type of a data packet whose type information is B is a neural network data packet.

With reference to the second aspect, in some implementations of the second aspect, the sending the first video frame data packet and the first neural network data packet includes: mapping the first video frame data packet to a first quality of service QoS flow based on the type of the second video frame data packet; mapping the first neural network data packet to a second QoS flow based on the type of the second neural network data packet; and sending the first QoS flow and the second QoS flow.

It should be understood that an SMF network element is responsible for controlling the QoS flow.

For example, the SMF may determine QoS configuration information based on a first message from a server, and then send the QoS configuration information to the UPF network element. The first message includes QoS configuration request information and data packet quantity information. The data packet quantity information indicates a quantity of video frame data packets and a quantity of neural network data packets. The QoS configuration request information is used to request that the video frame data packet and the neural network data packet are respectively carried on two QoS flows. The QoS configuration information indicates that the first QoS flow is used to carry the video frame data packet, and the second QoS flow is used to carry the neural network data packet.

The UPF network element may map the first video frame data packet to the first QoS flow and map the second neural network data packet to the second QoS flow based on the type of the data packet and the QoS configuration information.

With reference to the second aspect, in some implementations of the second aspect, the first video frame data packet and the first neural network data packet are general packet radio service tunneling protocol-user plane GTP-U data packets, and the first identification information and the second identification information are located in a GTP-U protocol of a packet header of the GTP-U data packet.

In some possible implementations, the first video frame data packet and the first neural network data packet are general packet radio service tunneling protocol-user plane GTP-U data packets, and the first type information and the second type information are located in a GTP-U protocol of a packet header of the GTP-U data packet.

With reference to the second aspect, in some implementations of the second aspect, the second video frame data packet is a real-time transport protocol (real-time transport protocol, RTP) data packet, a user datagram protocol (user datagram protocol, UDP) data packet, or a first protocol layer data packet, and a first protocol layer is a protocol layer between an RTP and a UDP.

With reference to the second aspect, in some implementations of the second aspect, the second neural network data packet is an RTP data packet, a UDP data packet, or a first protocol layer data packet, and a first protocol layer is a protocol layer between an RTP and a UDP.

According to a third aspect, a data transmission apparatus is provided. The apparatus may be an access network device, may be a component (for example, a processor, a chip, or a chip system) of the access network device, or may be a logical module or software that can implement all or some functions of the access network device. The apparatus includes: an interface unit, configured to receive a first video frame data packet and a first neural network data packet, where the first neural network data packet is used to carry neural network parameter information, the neural network parameter information is used to process data of the first video frame data packet, the first video frame data packet includes first identification information, the first neural network data packet includes second identification information, and the first identification information and the second identification information each indicate a correspondence between the first video frame data packet and the first neural network data packet; and a processing unit, configured to control, based on the first identification information and the second identification information, the interface unit to send the first video frame data packet and the first neural network data packet.

That the first identification information and the second identification information each indicates a correspondence between the first video frame data packet and the first neural network data packet may be understood as that the first identification information and the second identification information each indicate a specific first neural network data packet whose parameter information may be used to restore data of a specific first video frame data packet. Alternatively, it may be understood as that the first identification information and the second identification information each may indicate a grouping status of the first video frame data packet and a grouping status of the first neural network data packet, and data of a first video frame data packet may be restored based on parameter information in a first neural network data packet in a same group.

In the data transmission apparatus provided in this application, the correspondence between the two types of data packets is indicated in the first neural network data packet and the first video frame data packet. In this way, data can be flexibly transmitted based on the correspondence, thereby improving user experience.

For example, in each group, first identification information in a first video frame data packet and second identification information in a first neural network data packet may be represented by a same number.

Optionally, in each group, the first identification information in the first video frame data packet and the second identification information in the first neural network data packet may also be represented by different numbers.

In some possible implementations, the first video frame data packet includes first identification information, and the first identification information may indicate a correspondence between the first video frame data packet and the first neural network data packet.

For example, present information in a first neural network data packet in each group, for example, a sequence number of a GTP-U data packet, may be placed in first identification information in a first data packet in a same group. The first identification information may indicate the correspondence between the first video frame data packet and the first neural network data packet, that is, may indicate a specific first neural network data packet whose parameter information may be used to restore data of a specific first video frame data packet.

In some possible implementations, the first neural network data packet includes second identification information, and the second identification information may also indicate a correspondence between the first video frame data packet and the first neural network data packet.

For example, present information in a first video frame data packet in each group, for example, a sequence number of a GTP-U data packet, may be placed in second identification information in a first neural network data packet. The second identification information may indicate the correspondence between the first video frame data packet and the first neural network data packet, that is, may indicate a specific first neural network data packet whose parameter information may be used to restore data of a specific first video frame data packet.

With reference to the third aspect, in some implementations of the third aspect, the first identification information indicates a group of the first video frame data packet.

With reference to the third aspect, in some implementations of the third aspect, the second identification information indicates a group of the first neural network data packet.

With reference to the third aspect, in some implementations of the third aspect, the first video frame data packet further includes first type information, and the first type information indicates a type of the first video frame data packet. The processing unit is further configured to control, based on the first identification information, the second identification information, and the first type information, the interface unit to send the first video frame data packet and the first neural network data packet.

For example, the first type information may be represented by a number. For example, the first type information in the first video frame data packet may be represented by a number 1, to indicate that a type of a data packet whose type information is 1 is a video frame data packet.

For example, the first type information may be represented by a letter. For example, the first type information in the first video frame data packet may be represented by a letter A, to indicate that a type of a data packet whose type information is A is a video frame data packet.

With reference to the third aspect, in some implementations of the third aspect, the first neural network data packet further includes second type information, and the second type information indicates a type of the first neural network data packet. The processing unit is further configured to control, based on the first identification information, the second identification information, and the second type information, the interface unit to send the first video frame data packet and the first neural network data packet.

For example, the second type information may be represented by a number. For example, the second type information in the first neural network data packet may be represented by a number 2, to indicate that a type of a data packet whose type information is 2 is a neural network data packet.

For example, the second type information may be represented by a letter. For example, the second type information in the first neural network data packet may be represented by a letter B, to indicate that a type of a data packet whose type information is B is a neural network data packet.

With reference to the third aspect, in some implementations of the third aspect, the first video frame data packet is carried on a first quality of service QoS flow; and the first neural network data packet is carried on a second QoS flow.

It should be understood that an SMF is responsible for controlling the QoS flow.

For example, the SMF may determine QoS configuration information based on a QoS flow configuration request from a server, where the QoS configuration information indicates that the first QoS flow is used to carry the video frame data packet, and the second QoS flow is used to carry the neural network data packet.

With reference to the third aspect, in some implementations of the third aspect, the processing unit is further configured to: map, to a radio resource based on the first identification information and the second identification information, the data packets carried on the first QoS flow and the second QoS flow, and transmit the data packets.

For example, the access network device may map the data packets carried on the first QoS flow and the second QoS flow to different code block groups CBGs of a physical layer transmission block TB for transmission. For example, there are five groups of to-be-sent data packets of an XR video, and each group includes one video frame data packet and one neural network data packet. The access network device may separately preferentially map the five video frame data packets carried on the first QoS flow to one or more CBGs for preferential transmission, and then separately map the five neural network data packets of the five groups and that are carried on the second QoS flow to other available CBGs for transmission. In this way, data transmission can be flexibly performed, and basic user experience can be ensured.

With reference to the third aspect, in some implementations of the third aspect, the first video frame data packet and the first neural network data packet are general packet radio service tunneling protocol-user plane GTP-U data packets, and the first identification information and the second identification information are located in a GTP-U protocol of a packet header of the GTP-U data packet.

In some possible implementations, the first video frame data packet and the first neural network data packet are general packet radio service tunneling protocol-user plane GTP-U data packets, and the first type information and the second type information are located in a GTP-U protocol of a packet header of the GTP-U data packet.

According to a fourth aspect, a data transmission apparatus is provided. The apparatus may be a user plane function UPF network element, may be a component (for example, a processor, a chip, or a chip system) of the UPF network element, or may be a logical module or software that can implement all or some functions of the UPF network element. The apparatus includes: an interface unit, configured to receive a second video frame data packet and a second neural network data packet of an XR video, where the second video frame data packet and the second neural network data packet each include first information, and the first information indicates a type and a group of the second video frame data packet and a type and a group of the second neural network data packet; and a processing unit, configured to generate a first video frame data packet and a first neural network data packet of the XR video, where the first neural network data packet is used to carry neural network parameter information, the neural network parameter information is used to process data of the first video frame data packet, the first video frame data packet includes first identification information, the first neural network data packet includes second identification information, the first identification information and the second identification information each indicate a correspondence between the first video frame data packet and the first neural network data packet, and the first identification information and the second identification information are determined based on the first information, where the interface unit is configured to send the first video frame data packet and the first neural network data packet.

That the first identification information and the second identification information each indicates a correspondence between the first video frame data packet and the first neural network data packet may be understood as that the first identification information and the second identification information each indicate a specific first neural network data packet whose parameter information may be used to restore data of a specific first video frame data packet. Alternatively, it may be understood as that the first identification information and the second identification information each may indicate a grouping status of the first video frame data packet and a grouping status of the first neural network data packet, and data of a first video frame data packet may be restored based on parameter information in a first neural network data packet in a same group.

In the data transmission apparatus provided in this application, the correspondence between the two types of data packets is indicated in the first neural network data packet and the first video frame data packet. In this way, data can be flexibly transmitted based on the correspondence, thereby improving user experience.

For example, in each group, first identification information in a first video frame data packet and second identification information in a first neural network data packet may be represented by a same number.

Optionally, in each group, the first identification information in the first video frame data packet and the second identification information in the first neural network data packet may also be represented by different numbers.

In some possible implementations, the first video frame data packet includes first identification information, and the first identification information may indicate a correspondence between the first video frame data packet and the first neural network data packet.

For example, present information in a first neural network data packet in each group, for example, a sequence number of a GTP-U data packet, may be placed in first identification information in a first video frame data packet in a same group. The first identification information may indicate the correspondence between the first video frame data packet and the first neural network data packet, that is, may indicate a specific first neural network data packet whose parameter information may be used to restore data of a specific first video frame data packet.

In some possible implementations, the first neural network data packet includes second identification information, and the second identification information may also indicate a correspondence between the first video frame data packet and the first neural network data packet.

For example, present information in a first video frame data packet in each group, for example, a sequence number of a GTP-U data packet, may be placed in second identification information in a first neural network data packet. The second identification information may indicate the correspondence between the first video frame data packet and the first neural network data packet, that is, may indicate a specific first neural network data packet whose parameter information may be used to restore data of a specific first video frame data packet.

With reference to the fourth aspect, in some implementations of the fourth aspect, the first identification information indicates a group of the first video frame data packet.

With reference to the fourth aspect, in some implementations of the fourth aspect, the second identification information indicates a group of the first neural network data packet.

With reference to the fourth aspect, in some implementations of the fourth aspect, the first video frame data packet further includes first type information, and the first type information indicates a type of the first video frame data packet.

For example, the first type information may be represented by a number. For example, the first type information in the first video frame data packet may be represented by a number 1, to indicate that a type of a data packet whose type information is 1 is a video frame data packet.

For example, the first type information may be represented by a letter. For example, the first type information in the first video frame data packet may be represented by a letter A, to indicate that a type of a data packet whose type information is A is a video frame data packet.

With reference to the fourth aspect, in some implementations of the fourth aspect, the first neural network data packet further includes second type information, and the second type information indicates a type of the first neural network data packet.

For example, the second type information may be represented by a number. For example, the second type information in the first neural network data packet may be represented by a number 2, to indicate that a type of a data packet whose type information is 2 is a neural network data packet.

For example, the second type information may be represented by a letter. For example, the second type information in the first neural network data packet may be represented by a letter B, to indicate that a type of a data packet whose type information is B is a neural network data packet.

With reference to the fourth aspect, in some implementations of the fourth aspect, that the interface unit sends the first video frame data packet and the first neural network data packet includes: the processing unit is configured to map the first video frame data packet to a first quality of service QoS flow based on the type of the second video frame data packet; the processing unit is configured to map the first neural network data packet to a second QoS flow based on the type of the second neural network data packet; and the interface unit is configured to send the first quality of service QoS flow and the second QoS flow.

It should be understood that an SMF network element is responsible for controlling the QoS flow.

For example, the SMF may determine QoS configuration information based on a first message from a server, and then send the QoS configuration information to the UPF network element. The first message includes QoS configuration request information and data packet quantity information. The data packet quantity information indicates a quantity of video frame data packets and a quantity of neural network data packets. The QoS configuration request information is used to request that the video frame data packet and the neural network data packet are respectively carried on two QoS flows. The QoS configuration information indicates that the first QoS flow is used to carry the video frame data packet, and the second QoS flow is used to carry the neural network data packet.

The UPF network element may map the first video frame data packet to the first QoS flow and map the second neural network data packet to the second QoS flow based on the type of the data packet and the QoS configuration information.

With reference to the fourth aspect, in some implementations of the fourth aspect, the first video frame data packet and the first neural network data packet are general packet radio service tunneling protocol-user plane GTP-U data packets, and the first identification information and the second identification information are located in a GTP-U protocol of a packet header of the GTP-U data packet.

In some possible implementations, the first video frame data packet and the first neural network data packet are general packet radio service tunneling protocol-user plane GTP-U data packets, and the first type information and the second type information are located in a GTP-U protocol of a packet header of the GTP-U data packet.

With reference to the fourth aspect, in some implementations of the fourth aspect, the second video frame data packet is a real-time transport protocol RTP data packet, a user datagram protocol UDP data packet, or a first protocol layer data packet, and a first protocol layer is a protocol layer between an RTP and a UDP.

With reference to the fourth aspect, in some implementations of the fourth aspect, the second neural network data packet is an RTP data packet, a UDP data packet, or a first protocol layer data packet, and a first protocol layer is a protocol layer between an RTP and a UDP.

According to a fifth aspect, a computing device is provided, including a memory and a processor. The memory is configured to store program instructions, and when the program instructions are executed in the processor, the processor is configured to perform the method in the implementations of the first aspect or the second aspect.

The processor in the fifth aspect may include a central processing unit (central processing unit, CPU), or may include a combination of a CPU and a neural network computing processor.

According to a sixth aspect, a computer-readable medium is provided. The computer-readable medium stores program code executed by a device, and the program code is used to perform the method in the implementations of the first aspect or the second aspect.

According to a seventh aspect, a chip is provided. The chip includes a processor and a data interface, and the processor reads, through the data interface, instructions stored in a memory, to perform the method in the implementations of the first aspect or the second aspect.

Optionally, in an implementation, the chip may further include a memory. The memory stores instructions, and the processor is configured to execute the instructions stored in the memory. When the instructions are executed, the processor is configured to perform the method in the first aspect or any implementation of the first aspect.

The chip may be specifically a field-programmable gate array (field-programmable gate array, FPGA) or an application-specific integrated circuit (application-specific integrated circuit, ASIC).

According to an eighth aspect, a communication apparatus is provided, including at least one processor. The at least one processor is coupled to a memory, and is configured to read and execute instructions in the memory, to perform the method in the implementations of the first aspect or the second aspect.

For beneficial effects of the second aspect to the eighth aspect, refer to related descriptions in the first aspect. Details are not described again.

### BRIEF DESCRIPTION OF DRAWINGS

FIG. 1 is a diagram of an architecture of a 5G mobile communication system;
FIG. 2 is a diagram of transmission of an XR video based on an SR technology;
FIG. 3 is a diagram of a principle of an SR technology based on a deep neural network;
FIG. 4 and FIG. 5 each are a diagram of comparison between a quantity of video frame data packets and a quantity of neural network data packets;
FIG. 6 is a diagram of an architecture of a 5G QoS guarantee mechanism;
FIG. 7 is a diagram of mapping of a 5G QoS flow;
FIG. 8 to FIG. 10 each are a diagram of a system architecture applicable to a data transmission method according to an embodiment of this application;
FIG. 11 to FIG. 14 each are a schematic flowchart of a data transmission method according to an embodiment of this application;
FIG. 15 is a diagram of locations to which identification information and type information are added according to an embodiment of this application; and
FIG. 16 and FIG. 17 each are a block diagram of a communication apparatus according to an embodiment of this application.

### DESCRIPTION OF EMBODIMENTS

The following describes technical solutions of this application with reference to accompanying drawings.

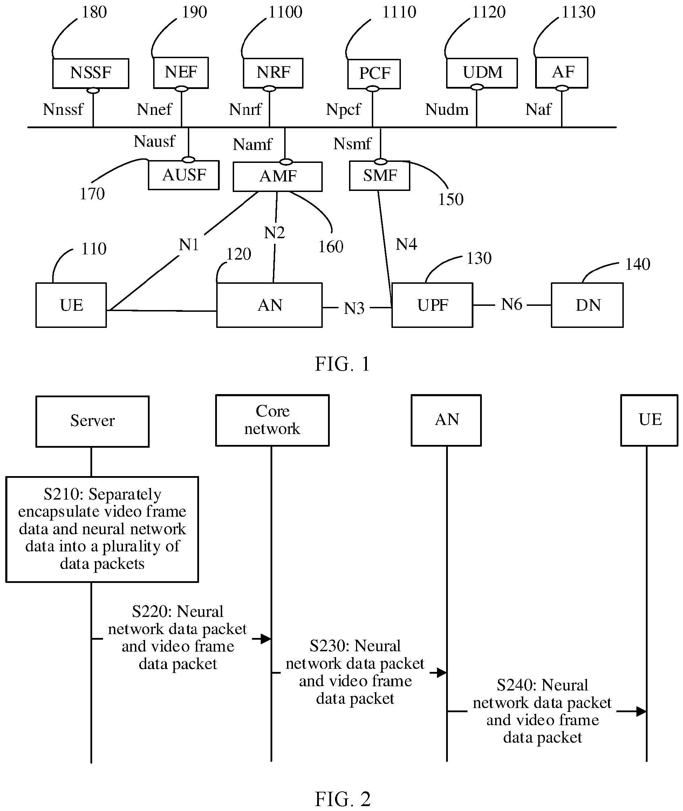

FIG. 1 is a diagram of an architecture of a 5G mobile communication system, including user equipment (user equipment, UE), an access network (access network, AN), a core network (core network, CN), and a data network (data network, DN). The architecture mainly includes the UE, the AN, and the CN. Logically, the UE, the AN, and the CN each may be divided into two parts: a user plane and a control plane. The control plane is responsible for mobile network management, and the user plane is responsible for business data transmission. In the figure, an NG2 reference point is located between an access network control plane and a core network control plane, an NG3 reference point is located between an access network user plane and a core network user plane, and an NG6 reference point is located between the core network user plane and a data network. The network architecture shown in FIG. 1 may specifically include the following components.
1. UE: is an entrance for interaction between a mobile user and a network, can provide a basic computing capability and storage capability, displays a business window for the user, and accepts an operation input of the user. The UE establishes a signal connection and a data connection to an AN by using a new air interface technology, to transmit a control signal and business data to a mobile network.

The user equipment in embodiments of this application may be referred to as a terminal device, a terminal, an access terminal, a subscriber unit, a subscriber station, a mobile station, a mobile console, a remote station, a remote terminal, a mobile device, a user terminal, a wireless communication device, a user agent, or a user apparatus. The UE may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function, or another processing device connected to a wireless modem, a vehicle-mounted device, a wearable device, a terminal device in a future 5G network or a terminal device in a future evolved public land mobile communication network (public land mobile network, PLMN), or the like; or may be a terminal device such as an edge device, a logical entity, an intelligent device such as a mobile phone, and an intelligent terminal, a communication device such as a server, a gateway, a base station, or a controller, or an internet of things (Internet of things, IoT) device such as a sensor, an electricity meter, or a water meter. The UE may alternatively be a wired device, such as a computer or a notebook computer. This is not limited in embodiments of this application.

2. AN: is similar to a base station in a conventional network, is deployed near UE, provides a network access function for an authorized user in a specific area, and can determine transmission tunnels of different quality based on a user level, a business requirement, and the like to transmit user data. The AN can manage and properly use a resource of the AN, provide an access service for the UE as required, and is responsible for forwarding a control signal and user data between the UE and a core network.

The access network may be an access network using different access technologies. Currently, there are two types of radio access technologies: a 3rd Generation Partnership Project (3rd Generation Partnership Project, 3GPP) access technology (for example, a radio access technology used in a 3G, 4G, or 5G system) and a non-3GPP (non-3GPP) access technology. The 3GPP access technology is an access technology that complies with a 3GPP standard specification. An access network using the 3GPP access technology is referred to as a radio access network (Radio Access Network, RAN), and an access network device in a 5G system is referred to as a next-generation node base station (next generation Node Base station, gNB). The non-3GPP access technology is an access technology that does not conform to the 3GPP standard specification, for example, an air interface technology represented by a Wi-Fi access point (access point, AP).

An access network that implements a network access function based on a wired communication technology may be referred to as a wired access network.

An access network that implements an access network function based on a wireless communication technology may be referred to as a radio access network (radio access network, RAN). The radio access network can manage radio resources, provide an access service for a terminal, and further complete forwarding of a control signal and user data between a terminal and a core network.

The radio access network device may be, for example, a NodeB (NodeB), an evolved NodeB (evolved NodeB, eNB or eNodeB), a gNB (gNB) in a 5G mobile communication system, a base station in a future mobile communication system, or an AP in a Wi-Fi system, or may be a radio controller in a cloud radio access network (cloud radio access network, CRAN) scenario. Alternatively, the access network device may be a relay station, an access point, a vehicle-mounted device, a wearable device, a network device in a future 5G network, a network device in a future evolved PLMN network, or the like. A specific technique and a specific device form that are used by the radio access network device are not limited in embodiments of this application. It may be understood that all or some functions of the radio access network device in this application may also be implemented by using a software function running on hardware, or may be implemented by using a virtualization function instantiated on a platform (for example, a cloud platform).

3. CN: is responsible for maintaining subscription data of a mobile network, managing a network element of the mobile network, and providing functions such as session management, mobility management, policy management, and security authentication for UE. When the UE is attached to the core network, the core network provides network access authentication for the UE; when the UE requests a business, the core network assigns a network resource to the UE; when the UE moves, the core network updates a network resource for the UE; when the UE is idle, the core network provides a fast restoration mechanism for the UE; when the UE is detached from the core network, the core network releases a network resource for the UE; and when the UE has business data, the core network provides a data routing function for the UE, for example, forwards uplink data to the DN, or receives downlink data for the UE from the DN, and forwards the downlink data to the AN, to send the downlink data to the UE.

4. DN: is a data network providing a business service for a user. Usually, a client is located in UE, and a server is located in the data network. The data network may be a private network, for example, a local area network; an external network that is not managed and controlled by an operator, for example, internet; or a dedicated network jointly deployed by operators, for example, a network that provides an IP multimedia subsystem (IP multimedia subsystem, IMS) service.

To facilitate understanding of the 5G network architecture, the following further describes the core network in the 5G network architecture.

The core network control plane uses a service-oriented architecture. Interaction between control plane network elements uses a service invoking mode to replace a point-to-point communication mode in a traditional architecture. In the service-oriented architecture, the control plane network element opens a service to another control plane network element for invoking by the another control plane network element. In point-to-point communication, a set of specific messages exist in a communication interface between the control plane network elements, and can be used only by control plane network elements at two ends of the interface during communication. Functions (network elements) of functional entities in the core network are as follows:
1. An access and mobility management function (access and mobility management function, AMF) entity is mainly used to perform mobility management, access management, and the like, and may be used to implement a function, for example, lawful interception or access authorization (or authentication), in mobility management entity (mobility management entity, MME) functions other than session management. In this embodiment of this application, the access and mobility management functional entity may be configured to implement a function of an access and mobility management network element.
2. A session management function (session management function, SMF) entity is mainly used to perform session management, internet protocol (internet protocol, IP) address allocation and management of UE, selection and management of a user plane function, a termination of an interface towards a policy control or charging function, downlink data notification, and the like. In this embodiment of this application, the session management functional entity may be configured to implement a function of a session management network element. The session management functional entity is mainly used to perform user plane network element selection, user plane network element redirection, internet protocol (internet protocol, IP) address allocation for a terminal device, session establishment, modification, and release, and QoS control.
3. A user plane function (user plane function, UPF) entity is a data plane gateway. The user plane functional entity may be configured to: perform packet routing and forwarding, perform quality of service (quality of service, QoS) processing on user plane data, or the like. User data can be accessed to a DN through this network element. In this embodiment of this application, the user plane functional entity may be configured to implement a function of a user plane gateway.
4. An authentication service function (authentication server function, AUSF) entity is mainly used to perform user authentication, and the like.
5. A network exposure function (network exposure function, NEF) entity is used to securely open, to outside, a business and a capability that are provided by a 3GPP network function.
6. A network repository function (network function (NF) repository function, NRF) entity is used to store description information of a network functional entity and a service provided by the network functional entity, and support service discovery, network element entity discovery, and the like.
7. A policy control function (policy control function, PCF) entity is a unified policy framework used to instruct network behavior, and provides policy rule information and the like for control plane function network elements (for example, a hosted network AMF or an SMF network element).
8. A unified data management (unified data management, UDM) entity is used to process a user identifier, access authentication, registration, mobility management, or the like.
9. An application function (application function, AF) entity is configured to perform data routing affected by an application, access a network exposure function network element, interact with a policy framework to perform policy control, or the like.
10. A network slice selection function (network slice selection function, NSSF) entity is used to search for a policy control function (policy control function, PCF) network element associated with a session.

The network architecture in FIG. 1 may further include another network element, for example, a network element or a device such as a network repository function (network repository function, NRF). This is not specifically limited in this application. Certainly, in a future communication system, the functional entities may have the foregoing names, or may have other names. This is not limited in this application.

In the network architecture, an N1 interface is a reference point between a terminal and a hosted network AMF entity. An N2 interface is a reference point between an AN and the hosted network AMF entity, and is configured to send a non-access stratum (non-access stratum, NAS) message and the like. An N3 interface is a reference point between the AN and a UPF entity, and is configured to transmit user plane data and the like. An N4 interface is a reference point between an SMF entity and the UPF entity, and is configured to transmit information such as tunnel identification information, data buffer indication information, and a downlink data notification message that are of an N3 connection. An N6 interface is a reference point between the UPF entity and a DN, and is configured to transmit user plane data and the like.

FIG. 2 is a diagram of data transmission of an XR video. Data transmission in FIG. 2 may be implemented by using the architecture of the 5G mobile communication system in FIG. 1.

Step 210: A server separately encapsulates neural network parameter information and data of an ultra-low resolution (ultra-low resolution, ULR) block/fragment (which may also be referred to as video frame data) into a plurality of data packets.

For example, the data of the ULR block/fragment may be encapsulated into dozens of data packets, to obtain a video frame data packet. The neural network parameter information may be encapsulated into several or dozens of data packets, to obtain a neural network data packet.

Step 220: The server sends the video frame data packet and the neural network data packet to a core network.

Correspondingly, the core network receives the video frame data packet and the neural network data packet.

Step 230: The core network sends the video frame data packet and the neural network data packet to an access network device.

Correspondingly, the access network device receives the video frame data packet and the neural network data packet.

Step 240: The access network device sends the video frame data packet and the neural network data packet to a user.

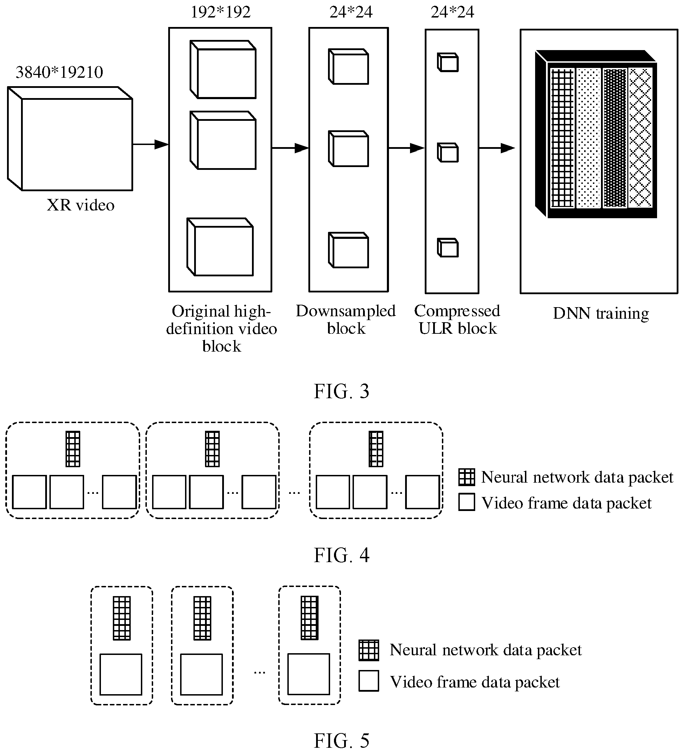

FIG. 3 is a diagram of a principle of an SR technology based on a deep neural network. The neural network parameter information and the data of the low-definition video in FIG. 2 may be obtained according to the principle in FIG. 3.

The server divides the XR video into blocks/segments in space and segments in time. A data processing amount can be shared by dividing the video in space and time. Parallel computing is performed to accelerate processing.

For example, an entire video with resolution of 4K (3840* 1920) is divided into small blocks in space, and resolution of each small block is 192* 192. Each small block is divided into segments with duration of 1 to 2 seconds, or one video may be grouped into one segment.

Then, downsampling processing is performed on each block/fragment, that is, sampling is performed in spatial domain or frequency domain, to obtain a low-resolution block/fragment. For example, resolution of a downsampled low-resolution block/fragment is 24*24.

A conventional video compression technology, for example, a high efficiency video coding technology (high efficiency video coding, HEVC), is used to further compress the downsampled low-resolution block/fragment into the ULR block/fragment.

The ULR block/fragment is used as an input of the deep neural network, and an original high-definition video block/fragment is used as a target output of the deep neural network. A peak signal-to-noise ratio (peak signal-to-noise ratio, PSNR) is used as a loss function to perform deep neural network training, and neural network parameter information used to restore the ULR block/fragment to a high-definition video is obtained.

With reference to FIG. 4 and FIG. 5, the following describes comparison between a quantity of video frame data packets and a quantity of neural network data packets in a data transmission process of an XR video.

FIG. 4 is a diagram of comparison between a quantity of video frame data packets and a quantity of neural network data packets.

A server separately encapsulates neural network parameter information and video frame data into a plurality of data packets. The quantity of video frame data packets may be greater than the quantity of neural network data packets.

For example, in a data transmission process, data of each video frame is placed in one data packet for data transmission, and neural network parameter information corresponding to every 100 video frames is placed in one data packet for data transmission. Data of each video frame needs to be restored based on the parameter information in the neural network data packet. Therefore, in this case, there are a total of 101 data packets for data transmission for every 100 pieces of video frame data.

FIG. 5 is a diagram of comparison between a quantity of video frame data packets and a quantity of neural network data packets.

A server separately encapsulates neural network parameter information and video frame data into a plurality of data packets. A quantity of video frame data packets may be equal to a quantity of neural network data packets.

For example, in a data transmission process, data of each video frame is placed in one data packet for transmission, and neural network parameter information corresponding to every video frame is independently placed in one data packet for data transmission. Data of each video frame data packet is restored based on the parameter information in the one neural network data packet. Therefore, in this case, there are a total of two data packets for data transmission for each video frame.

In the data transmission process, the video frame data packet and the neural network data packet are generally considered as data packets of a source end, and are not distinguished.

For example, when the quantity of video frame data packets is greater than the quantity of neural network data packets, in the data transmission process, one neural network data packet is lost or incorrect. Consequently, a user cannot watch a high-definition video of 100 video frames corresponding to the neural network, thereby affecting user experience.

For example, when the quantity of video frame data packets is equal to the quantity of neural network data packets, in the data transmission process, if only one neural network data packet in two data packets of each video frame is supported due to a limited network transmission capability, the user cannot watch a video image of the frame, thereby affecting user experience.

For the foregoing problem, this application provides a data transmission method, so that data transmission is more flexibly performed based on a correspondence between a video frame data packet and a neural network data packet, thereby improving user experience.

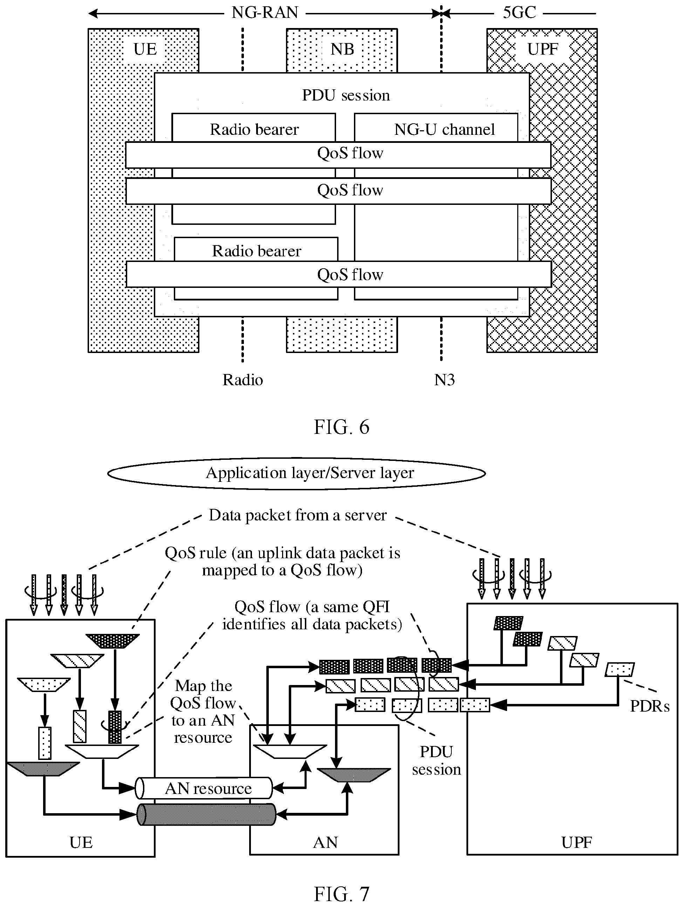

The following describes an architecture of a 5G QoS guarantee mechanism in this application with reference to FIG. 6.

QoS is a guarantee mechanism for business transmission quality, and intends to provide end-to-end service quality guarantee for different requirements of various businesses. In one protocol data unit (protocol data unit, PDU) session (session), a QoS flow is a finest granularity of QoS differentiation. In a 5G system, a QoS flow identifier (QoS flow identifier, QFI) is used to identify a QoS flow, and the QFI needs to be unique in one PDU session. In other words, one PDU session may have a plurality of (a maximum of 64) QoS flows, but each QoS flow has a different QFI. In one PDU session, user plane business flows with a same QFI use a same business forwarding processing manner (for example, scheduling).

In terms of configuration granularity, one PDU session may correspond to a plurality of radio bearers (radio bearer, RB). One radio bearer may further include a plurality of QoS flows.

For each PDU session, there is still a single NG-U channel between a 5GC and an AN, and a radio bearer is used between the AN and UE. The AN controls to map a QoS flow to a bearer.

FIG. 7 is a diagram of mapping of a 5G QoS flow to which an embodiment of this application is applicable. A 5GC and an AN map a data packet to an appropriate QoS flow and an appropriate radio bearer to ensure service quality.

A UPF implements mapping from an internet protocol (Internet Protocol, IP) flow to a QoS flow, and the AN implements mapping from the QoS flow to an RB. QoS mapping may include UPF mapping, AN mapping, and UE mapping.

UPF mapping: After receiving downlink data, the UPF maps the data to a corresponding QoS flow based on an allocation and retention priority; then performs QoS control of the QoS flow, and marks the data through a QFI; and sends the data to the AN through an N3 interface corresponding to the QoS flow.

AN mapping: After receiving downlink data, the AN determines an RB and a QoS flow corresponding to a QFI; and then performs QoS control corresponding to the QoS flow, and sends the data to the UE through the RB. Alternatively, after receiving uplink data, the AN determines a QoS flow corresponding to a QFI; and then performs QoS control corresponding to the QoS flow, and sends the data to the UPF through an N3 interface corresponding to the QoS flow.

UE mapping: When needing to send uplink data, the UE maps the uplink data to a corresponding QoS flow according to a QoS rule; and then sends the uplink data through an RB corresponding to the QoS flow.

It should be understood that an SMF is responsible for controlling the QoS flow. When one PDU session is established, the SMF may configure response QoS parameters for the UPF, the AN, and the UE. The QoS flow can be established and modified through the PDU session or defined through pre-configuration. A configuration response parameter of one QoS flow includes three parts:
1. QoS configuration (QoS profile): The SMF can provide a QoS configuration for an AN through an N2 interface, or the QoS configuration can be pre-configured in the AN.

It should be understood that a QoS configuration of a QoS flow may also be referred to as a QoS profile. Table 1 shows specific parameters of the QoS configuration.

**Table 1**

| QoS flow parameter | Specific description |
|---|---|
| 5G QoS identifier (5G quality identifier, 5QI) | Indicates a radio feature of a QoS flow. |
| | Each QoS flow has a 5QI. |
| Allocation and retention priority (allocation and retention priority, ARP) | Indicates a priority of the QoS flow over an NG interface. Each QoS flow has an ARP. |
| | May be applied to QoS flows of different UEs or QoS flows of one UE. |
| Guaranteed flow bit rate (guaranteed flow bit rate, GFBR) | Indicates a guaranteed data rate. |
| | Only a guaranteed bit rate (Guaranteed Bit Rate, GBR) QoS flow has the GFBR, including uplink transmission and downlink transmission. |
| Maximum flow bit rate (maximum flow bit rate, MFBR) | Indicates a maximum data rate. |
| | Only the GBR QoS flow has the MFBR, including uplink and downlink transmission. |
| Notification control | Indicates whether a gNB reports the notification control to a 5GC when the QoS cannot be met. |
| | Only the GBR QoS flow has the notification control. |
| Maximum packet loss rate (maximum packet loss rate, MPLR) | Indicates a maximum packet loss rate that can be tolerated by one QoS flow. |
| | Only the GBR QoS flow may provide the MPLR. |
| Reflective QoS attribute (reflective QoS attribute, RQA) | Indicates whether uplink transmission complies with mirroring mapping. |
| | Only a non-guaranteed bit rate (non-guaranteed bit rate, non-GBR) QoS flow has the RQA. |

The 5QI is a scalar used to index a 5G QoS feature. The 5QI can be standardized, pre-configured, or dynamically defined. The following table 2 shows the 5QI attribute.

**Table 2**

| 5QI attribute | Description |
|---|---|
| Resource type | GBR, delay critical GBR, or non-GBR. |
| Priority | Radio interface scheduling priority. |
| | Applied between UEs or between QoS flows of UE. |
| Data delay | GBR QoS flow: when a GFBR is met, 98% of data packets should not exceed a maximum delay critical GBR; or when the GFBR is met, a data packet that exceeds the data delay is considered being lost. |
| Packet error rate | Packet loss rate of the GBR QoS flow. |
| Average window | Time period during which the GFBR and an MFBR of the GBR QoS flow are calculated. |
| Maximum burst data volume | Maximum data volume within a data delay range. |

2. QoS rule (QoS rule): The SMF can provide the QoS rule for the UE through an N1 interface. Alternatively, the UE may derive and obtain the QoS rule by using a QoS mechanism.

It should be understood that the UE performs classification and marking on an uplink user plane data business, that is, maps the uplink data to a corresponding QoS flow according to the QoS rule. The QoS rule may be explicitly provided for the UE (that is, explicitly configured for the UE through signaling in a PDU session establishment/modification procedure), may be pre-configured on the UE, or may be implicitly derived by the UE by using a reflective QoS mechanism. The QoS rule has the following features.

One QoS rule includes a QFI associated with a QoS flow, a data packet filter set (a filter list), and a priority.

One QoS flow may have a plurality of QoS rules.

One default QoS rule needs to be configured for each PDU session, and the default QoS rule is associated with one QoS flow.

3. Uplink and downlink data packet detection rule (packet detection rule, PDR): The SMF provides the PDR(s) for the UPF through an N4 interface.

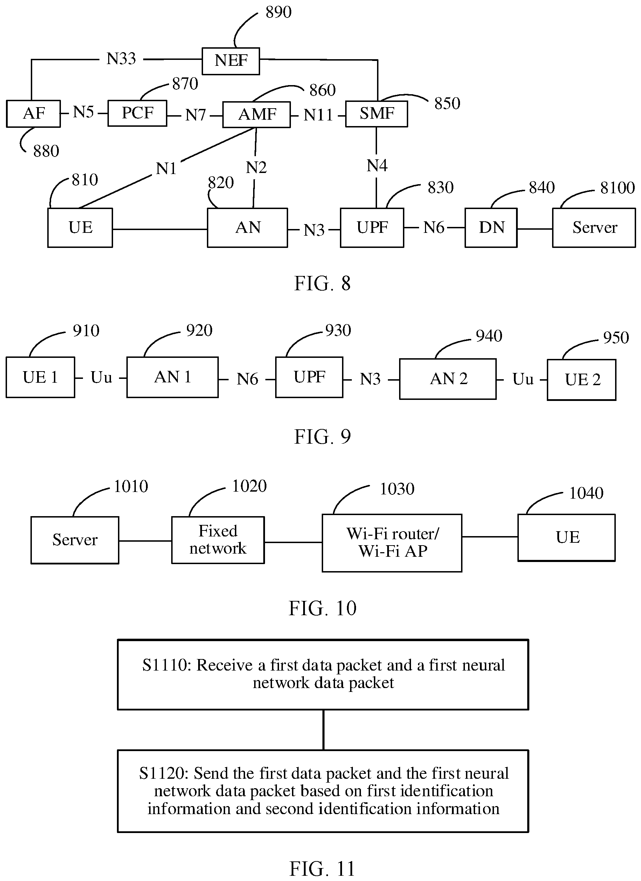

FIG. 8 is a diagram of a system architecture applicable to data transmission according to an embodiment of this application. As shown in FIG. 8, the following separately describes each part in the system architecture.

It should be noted that names of messages between network elements, names of parameters in the messages, or the like in the following embodiments of this application are merely examples, and there may be other names in a specific implementation. This is not specifically limited in embodiments of this application.
1. User equipment (user equipment, UE) 810 may include a handheld device or a computing device that has a wireless communication function, or another processing device connected to a wireless modem, a vehicle-mounted device, a wearable device; may be a terminal device such as an edge device, a logical entity, an intelligent device such as a mobile phone, or an intelligent terminal; or may be head-mounted display glasses, a video playback device, or a holographic projector. This is not limited in embodiments of this application.
2. An access network (access network, AN) 820 is configured to provide a network access function for an authorized terminal device in a specific area, and can use transmission tunnels of different quality based on a level, a business requirement, and the like of the terminal device.

The AN network element can manage a resource of the AN network element, provide an access service for the terminal device, and complete forwarding of a control signal and terminal device data between the terminal device and a core network. The AN network element may also be understood as a base station in a conventional network.

3. A user plane function (user plane function, UPF) network element 830 is configured to: perform packet routing and forwarding, perform QoS processing on user plane data, and the like.

In the 5G communication system, the user plane network element may be a user plane function (user plane function, UPF) network element. In a future communication system, the user plane network element may still be the UPF network element, or may have another name. This is not limited in this application.

4. Data network (data network, DN) 840: In the 5G communication system, the data network element may be a data network (data network, DN). In a future communication system, the data network element may still be the DN, or may have another name. This is not limited in this application.

In the 5G communication system, the session management function network element may be a session management function (session management function, SMF) network element. In a future communication system, the session management function network element may still be the SMF network element, or may have another name. This is not limited in this application.

5. A session management function (session management function, SMF) network element 850 is mainly used to perform mobility management, access management, and the like, and may be used to implement functions, for example, lawful interception and access authorization/authentication, in mobility management entity (mobility management entity, MME) functions other than session management.

In the 5G communication system, the session management function network element may be a session management function (session management function, SMF) network element. In a future communication system, the session management function network element may still be the SMF network element, or may have another name. This is not limited in this application.

6. An access management and mobility management (access and mobility management function, AMF) network element 860 is mainly used to perform mobility management, access management, and the like, and may be used to implement functions, for example, lawful interception and access authorization/authentication, in mobility management entity (mobility management entity, MME) functions other than session management.

In the 5G communication system, the access management network element may be an access and mobility management function (access and mobility management function, AMF) network element. In a future communication system, the access management network element may still be the AMF network element, or may have another name. This is not limited in this application.

7. A network slice selection network element 870 is configured to search for a policy control function (policy control function, PCF) network element associated with a session.

In the 5G communication system, the network slice selection network element may be a network slice selection function (network slice selection function, NSSF) network element. In a future communication system, the network slice selection network element may still be the NSSF network element, or may have another name. This is not limited in this application.

8. An application function (application function, AF) network element 880 is configured to perform data routing affected by an application, access a network exposure function network element, interact with a policy framework to perform policy control, or the like.

In the 5G communication system, the application network element may be an application function (application function, AF) network element. In a future communication system, the application network element may still be the AF network element, or may have another name. This is not limited in this application.

9. A network exposure (network exposure function, NEF) network element 890 opens a network function to a third party through a northbound API.

In the 5G communication system, the network exposure network element may be a network exposure function (network exposure function, NEF) network element. In a future communication system, the network exposure network element may still be the NEF network element, or may have another name. This is not limited in this application.

10. A server 8100 provides a computing or application service for UE.

The server may provide data of an application service. For example, the data may be video data, or may be audio data, or may be data of another type. A data type of the application service provided by the server is merely used as an example and is not limited in this application.

In the architecture shown in FIG. 8, an N1 interface is a reference point between UE and an AMF. An N2 interface is a reference point between an AN and the AMF, and is configured to send a NAS message and the like. An N3 interface is a reference point between the AN and a UPF, and is configured to transmit user plane data and the like. An N4 interface is a reference point between an SMF and the UPF, and is configured to transmit information such as tunnel identification information, data buffer indication information, and a downlink data notification message that are of an N3 connection. An N5 interface is a reference point between an AF and a PCF. An N6 interface is a reference point between the UPF and a DN, and is configured to transmit user plane data and the like. N11 is a reference point between the AMF and the SMF.

FIG. 9 is a diagram of another system architecture applicable to a data transmission method according to an embodiment of this application. As shown in FIG. 8, the following separately describes each part in the system architecture.

It should be noted that names of messages between network elements, names of parameters in the messages, or the like in the following embodiments of this application are merely examples, and there may be other names in a specific implementation. This is not specifically limited in embodiments of this application.

UE 910 may be a primary domain tactile user and a manual system interface, and receive data such as video and audio from a controlled domain. The UE 910 may include various handheld devices, vehicle-mounted devices, wearable devices such as head-mounted display glasses, or computing devices that have wireless communication functions, or other processing devices connected to a wireless modem, and various forms of terminals, mobile stations (mobile station, MS), user equipments, and soft terminals such as a video playback device and a holographic projector. This is not limited in embodiments of this application.

An AN 1 920 is configured to provide a network access function for an authorized terminal device in a specific area, and can use transmission tunnels of different quality based on a level, a business requirement, and the like of the terminal device.

The AN can manage a resource of the AN, provide an access service for the terminal device, and complete forwarding of a control signal and terminal device data between the terminal device and a core network. The AN may also be understood as a base station in a conventional network.

A UPF 930 is configured to: perform packet routing and forwarding, perform QoS processing on user plane data, and the like.

In the 5G communication system, the user plane network element may be a user plane function (user plane function, UPF) network element. In a future communication system, the user plane network element may still be the UPF network element, or may have another name. This is not limited in this application.

An AN 2 940 is configured to provide a network access function for an authorized terminal device in a specific area, and can use transmission tunnels of different quality based on a level, a business requirement, and the like of the terminal device.

The AN can manage a resource of the AN, provide an access service for the terminal device, and complete forwarding of a control signal and terminal device data between the terminal device and a core network. The AN may also be understood as a base station in a conventional network.

UE 2 950 is a remote control robot or a remote operator of a controlled domain, and may send data such as video and audio to a primary domain. The UE 2 950 may include various handheld devices, vehicle-mounted devices, wearable devices such as head-mounted display glasses, or computing devices that have wireless communication functions, or other processing devices connected to a wireless modem, and various forms of terminals, mobile stations (mobile station, MS), user equipments, and soft terminals, such as a video playback device and a holographic projector. This is not limited in embodiments of this application.

FIG. 10 is a diagram of another system architecture applicable to a data transmission method according to an embodiment of this application. The following describes each part in the system architecture with reference to FIG. 10.

It should be noted that names of messages between network elements, names of parameters in the messages, or the like in the following embodiments of this application are merely examples, and there may be other names in a specific implementation. This is not specifically limited in embodiments of this application.
1. A server 1010 may provide application service data, for example, may provide video data, audio data, or data of another type. A data type of the application service provided by the server is merely used as an example and is not limited in this application.
2. A fixed network 1020 is a network over which a signal is transmitted through solid media such as a metal wire or an optical fiber.
   In this application, application service data such as video data and audio data may be transmitted to a Wi-Fi router/Wi-Fi AP 1030 over the fixed network.
3. A Wi-Fi router/Wi-Fi AP 1030 may convert a wired network signal and a mobile network signal into a wireless signal for UE that has a wireless communication function to receive.
4. UE 1040 may include various handheld devices, vehicle-mounted devices, wearable devices, or computing devices that have wireless communication functions, or other processing devices connected to a wireless modem, such as head-mounted display glasses, a video playback device, and a holographic projector. This is not limited in embodiments of this application.

FIG. 11 is a schematic flowchart of a data transmission method according to an embodiment of this application.

The data transmission method in FIG. 11 may be performed by an access network device, may be performed by a component (for example, a processor, a chip, or a chip system) of the access network device, or may be implemented by a logical module or software that can implement all or some functions of the access network device. This is not limited in this embodiment of this application.

Data transmission in this application may be video data transmission, audio data transmission, or transmission of another type of data. Atype of data to be transmitted is not limited in this embodiment of this application.

S1110: Receive a first data packet and a first neural network data packet.

The first neural network data packet is used to carry neural network parameter information, the neural network parameter information is used to process data of the first data packet, the first data packet includes first identification information, the first neural network data packet includes second identification information, and the first identification information and the second identification information each indicate a correspondence between the first data packet and the first neural network data packet.

For example, in a transmission process of an XR video, the first data packet may be a first video frame data packet. Data transmission of the XR video may include transmission of a video frame data packet and transmission of a neural network data packet. The access network device may receive a first video frame data packet and a first neural network data packet, where the first video frame data packet is used to carry data of a low-definition video of the XR video, the first neural network data packet is used for neural network parameter information, the neural network parameter information may be used to process data of the first video frame data packet, the first video frame data packet includes first identification information, the first neural network data packet includes second identification information, and the first identification information and the second identification information each indicate a correspondence between the first video frame data packet and the first neural network data packet.

The first identification information and the second identification information each may indicate the correspondence between the first data packet and the first neural network data packet, that is, may indicate a specific neural network data packet whose parameter information may be used to restore data of a specific first data packet. Alternatively, it is understood as that the first identification information and the second identification information each may indicate a grouping status of the first data packet and a grouping status of the neural network data packet, and data of a first data packet may be restored based on parameter information in a first neural network data packet in a same group.

Optionally, in each group, first identification information in a first data packet and second identification information in a first neural network data packet may be represented by a same number. For example, in a first group, both first identification information in a first data packet and second identification information in a first neural network data packet are represented by a number 1; in a second group, both first identification information in a first data packet and second identification information in a first neural network may be represented by a number 2; and by analogy. In other words, parameter information in the first neural network data packet whose second identification information is 1 may be used to restore the first data packet whose first identification information is 1, and parameter information in the first neural network data packet whose second identification information is 2 may be used to restore the first data packet whose first identification information is 2.

Optionally, in each group, first identification information in a first data packet and second identification information in a first neural network data packet may also be represented by different numbers. For example, the first identification information is represented by an odd number, the second identification information is represented by an even number, and twice of first identification information in a same group is second identification information. In a first group, first identification information in a first data packet is 1, and second identification information in a first neural network data packet is 2. It indicates that the data packet whose identification information is 1 and the data packet whose identification information is 2 belong to a same group, and parameter information in a first neural network data packet in the group may be used to restore data of a first data packet in the group. In a second group, first identification information in a first data packet is 3, and second identification information in a first neural network is 6. It indicates that the data packet whose identification information is 3 and the data packet whose identification information is 6 belong to a same group, and parameter information in a first neural network data packet may be used to restore data of a first data packet in the group. The rule applies.

Alternatively, the first identification information and the second identification information may be represented in another manner. The representation manners of the first identification information and the second identification information in this embodiment of this application are merely used as examples and are not limited.

In some implementations, the first data packet and the first neural network data packet may alternatively be sent or received in a specific sequence. In this case, only a first sent data packet and a last sent data packet in each group may be identified.

For example, a receiving sequence of data packets is as follows: a first group (one first neural network data packet, one first data packet, one first data packet, one first neural network data packet, and one first data packet), a second group (one first neural network data packet, one first data packet, one first data packet, one first data packet, and one first neural network data packet), and a third group (one first data packet, one first data packet, one first data packet, one first neural network data packet, and one first data packet).

Correspondingly, when the data packets are sent, in the first group, second identification information 1 may be added to the first sent first neural network data packet, and first identification information 1 may be added to the last sent first data packet. In the second group, second identification information 2 may be added to the first sent first neural network data packet and the last first sent first neural network data packet. In the third group, first identification information 3 may be added to the first sent first data packet and the last sent first data packet. In other words, the first and last sent/received data packets whose identification information is 1 and data packets between the first and the last sent/received data packets belong to a same group. The first and last sent/received data packets whose identification information is 2 and data packets between the first and the last sent/received data packets belong to a same group. The first and last sent/received data packets whose identification information is 3 and data packets between the first and the last sent/received data packets belong to a same group.

It should be understood that there may alternatively be other different quantities of first data packets and first neural network data packets in each group. This is merely an example and is not limited in this embodiment of this application.

In some implementations, the first data packet includes first identification information, and the first identification information indicates a correspondence between the first data packet and the first neural network data packet, that is, indicates a specific first neural network data packet whose parameter information may be used to restore data of a specific first data packet. Alternatively, it may be understood that the first identification information may indicate a grouping status of the first data packet and a grouping status of the first neural network data packet, and data of a first data packet may be restored based on parameter information in a neural network data packet in a same group.

Alternatively, the first identification information and the second identification information may be represented in another manner. The representation manners of the first identification information and the second identification information in this embodiment of this application are merely used as examples and are not limited.

Optionally, the first neural network data packet may be a general packet radio service tunneling protocol-user plane part (general packet radio service tunneling protocol-user plane, GTP-U) data packet.

For example, present information in a first neural network data packet in each group, for example, a sequence number of the GTP-U data packet, is placed in first identification information in a first data packet in a same group. For example, there are a total of five first neural network data packets in a first group, and labels of the five GTP-U data packets are 1, 2, 3, 4, and 5. A label 1 of a first packet and a label 5 of a last packet are marked as first identification information in a first data packet in the first group. In other words, the data packets whose first identification information is 1 and 5 and the GTP-U data packets whose labels are 1, 2, 3, 4, and 5 belong to a same group, and parameter information in a first neural network data packet in the group may be used to restore data of a first data packet in the group. There are a total of two first neural network data packets in a second group, and labels of the two GTP-U data packets are 6 and 7. A label 6 of a first packet and a label 7 of a last packet are marked as first identification information in a first data packet in the second group. In other words, the data packets whose first identification information is 6 and 7 and the GTP-U data packets whose labels are 6 and 7 belong to a same group, and parameter information in a first neural network data packet in the group may be used to restore data of a first data packet in the group.

It should be understood that the data packets whose first identification information is 1 and 5 may be understood as that the first identification information in the first data packet in the first group is "1" and "5". Alternatively, it may be understood that the first identification information in the first data packet in the first group is 15, and 15 indicates a number "1" and a number "5", instead of a number "15". The data packets whose first identification information is 6 and 7 may be understood as that the first identification information in the first data packet in the second group is "6" and "7". Alternatively, it may be understood that the first identification information in the first data packet in the second group is 67, and 67 indicates a number "6" and a number "7", instead of a number "67".

Alternatively, the first identification information may be represented in another manner. The representation manner of the first identification information in this embodiment of this application is merely an example and is not limited.

Certainly, there may alternatively be another quantity of first neural network data packets in each group. This is merely an example and is not limited in this embodiment of this application.

In some implementations, the first neural network data packet includes second identification information, and the second identification information indicates a correspondence between the first data packet and the first neural network data packet, that is, indicates a specific first neural network data packet whose parameter information may be used to restore data of a specific first data packet. Alternatively, it may be understood that the second identification information may indicate a grouping status of the first data packet and a grouping status of the first neural network data packet, and parameter information in a neural network data packet may be used to restore data of a first data packet in a same group.

Optionally, the first data packet may be a GTP-U data packet.

For example, present information in a first data packet in each group, for example, a sequence number of the GTP-U data packet, is placed in second identification information in a first neural network data packet in a same group. For example, there are a total of two first data packets in a first group, and labels of the two GTP-U data packets are 1 and 2. A label 1 of a first packet and a label 2 of a last packet are marked as second identification information in a first neural network data packet in the first group. In other words, the data packets whose second identification information is 1 and 2 and the GTP-U data packets whose labels are 1 and 2 belong to a same group, and parameter information in a first neural network data packet in the group may be used to restore data of a first data packet in the group. There are a total of four first data packets in a second group, and labels of the four GTP-U data packets are 3, 4, 5, and 6. A label 3 of a first packet and a label 6 of a last packet are marked as first identification information in a first data packet in the group. In other words, the data packets whose first identification information is 3 and 6 and the GTP-U data packets whose labels are 3, 4, 5, and 6 belong to a same group, and parameter information in a first neural network data packet in the group may be used to restore data of a first data packet in the group.

It should be understood that the data packets whose second identification information is 1 and 2 may be understood as that the second identification information in the first neural network data packet in the first group is "1" and "2". Alternatively, it may be understood that the second identification information in the first neural network data packet in the first group is 12, and 12 indicates a number "1" and a number "2", instead of a number "12". The data packets whose second identification information is 3 and 6 may be understood as that the second identification information in the first neural network data packet in the second group is "3" and "6". Alternatively, it may be understood that the second identification information in the first neural network data packet in the second group is 36, and 36 indicates a number "3" and a number "6", instead of a number "36".

Alternatively, the second identification information may be represented in another manner. The representation manner of the second identification information in this embodiment of this application is merely an example and is not limited.

Certainly, there may alternatively be another quantity of first data packets in each group. This is merely an example and is not limited in this embodiment of this application.

In some implementations, the first data packet further includes first type information. The first type information may indicate a type of the first data packet, that is, indicate that which data packet is the first data packet.

For example, the first type information in the first data packet may be represented by a number. For example, in a data transmission process of an XR video, the first data packet may be a first video frame data packet, and first type information in the first video frame data packet may be represented by a number 1, to indicate that a type of a data packet whose type information is 1 is a video frame data packet.

For example, the first type information in the first data packet may be represented by a letter. For example, in a data transmission process of an XR video, the first data packet may be a first video frame data packet, and first type information in the first video frame data packet may be represented by a letter A, to indicate that a type of a data packet whose type information is A is a video frame data packet.

Alternatively, the first type information may be represented in another manner. The representation manner of the first type information in this embodiment of this application is merely used as an example and is not limited.

In some implementations, the first neural network data packet further includes second type information. The second identification information indicates a type of the first neural network data packet, that is, indicates that which data packet is a neural network data packet.

For example, the second type information may be represented by a number. For example, in a data transmission process of an XR video, the second type information in the first neural network data packet may be represented by a number 2, to indicate that a type of a data packet whose type information is 2 is a neural network data packet.

For example, the second type information may be represented by a letter. For example, in a data transmission process of an XR video, second type information in the first neural network data packet may be represented by a letter B, to indicate that a type of a data packet whose type information is B is a neural network data packet.

Alternatively, the second type information may be represented in another manner. This is merely an example and is not limited in this embodiment of this application.

Alternatively, the first type information and the second type information may be represented in another manner. This is merely an example and is not limited in this embodiment of this application.

S 1120: Send the first data packet and the first neural network data packet based on the first identification information and the second identification information.

The first identification information and the second identification information each indicate the correspondence between the first data packet and the first neural network data packet. Sending the first data packet and the first neural network data packet based on the first identification information and the second identification information may also be understood as sending the first data packet and the first neural network data packet based on the correspondence between the first data packet and the first neural network data packet.

In some implementations, the first data packet includes first identification information, and the first identification information may indicate the correspondence between the first data packet and the first neural network data packet. In this case, the first data packet and the first neural network data packet may be sent based on the first identification information.

In some implementations, the second data packet includes second identification information, and the second identification information may also indicate the correspondence between the first data packet and the first neural network data packet. In this case, the first data packet and the first neural network data packet may be sent based on the second identification information.

In some implementations, the access network device maps the first data packet and the first neural network data packet to a same QoS flow for transmission.

For example, in a data transmission process of an XR video, when a quantity of first neural network data packets is equal to a quantity of first video frame data packets, and channel quality is poor, the access network device may ensure sending of the first video frame data packet as much as possible.

There are five groups of to-be-sent data packets of the XR video, and each group includes one first video frame data packet and one first neural network data packet. However, only nine data packets can be sent based on current channel quality. In this case, the access network device may send five first video frame data packets and four first neural network data packets of the five groups. The access network device may send the data packet of the XR video based on the type of the data packet and the correspondence, so that when channel quality is poor, UE can watch a video picture, thereby ensuring basic user experience.

It should be understood that in a process of sending the nine data packets, if the access network device receives another video frame data packet and another neural network data packet, the access network device may still first send the nine data packets instead of the other received data packets.

For example, in a data transmission process of an XR video, when a quantity of first neural network data packets is less than a quantity of first video frame data packets, and channel quality is good, the access network device may ensure sending of the first neural network data packet as much as possible.

There are two groups of to-be-sent data packets of the XR video, and each group includes one first neural network data packet and 10 first video frame data packets. When the channel quality is good, first neural network data packets of the two groups should be preferentially sent, and then first video frame data packets of the two groups should be sent. In this way, the access network device may send the data packet of the XR video based on the type of the data packet and the correspondence, so that when the channel quality is good, it can be ensured that the user may restore a high-definition video as much as possible, thereby ensuring UE experience.

It should be understood that, in a process of sending the two groups of data packets, if the access network device receives another video frame data packet and another neural network data packet, the access network device may still preferentially send the first neural network data packets of the two groups, and then send the first video frame data packets of the two groups.

In some implementations, the access network device maps, to a radio resource based on the first identification information and the second identification information, the data packets carried on the first QoS flow and the second QoS flow for transmission.

That the access network device maps, to the radio resource based on the first identification information and the second identification information, the data packets carried on the first QoS flow and the second QoS flow for transmission may be understood as that the access network device maps, to the radio resource based on the correspondence between the first data packet and the first neural network data packet, the data packets carried on the first QoS flow and the second QoS flow for transmission.

In some implementations, the first identification information may indicate the correspondence between the first data packet and the first neural network data packet. In this case, the access network device may map, to the radio resource based on the first identification information, the data packets carried on the first QoS flow and the second QoS flow for transmission.

In some implementations, the second identification information may indicate the correspondence between the first data packet and the first neural network data packet. In this case, the access network device may map, to the radio resource based on the second identification information, the data packets carried on the first QoS flow and the second QoS flow for transmission.

For example, a UPF may map the first data packet to the first QoS flow, and map the first neural network data packet to the second QoS flow. Then, the first QoS flow and the second QoS flow are sent to the access network device. The access network device may map the data packets carried on the first QoS flow and the second QoS flow to different code block groups (code block group, CBG) of a physical layer transmission block (transmission block, TB) for transmission.

For example, in a transmission process of an XR video, when a quantity of first video frame data packets is greater than a quantity of first neural network data packets, an ARP of the second QoS flow is higher than that of the first QoS flow. One group of to-be-sent data packets of the XR video includes 50 video frame data packets and one neural network data packet. The access network device may preferentially map one first neural network data packet carried on the second QoS flow to one or more CBGs for preferential transmission. Then, the access network device may further map the video frame data packets of the group that are carried on the first QoS flow to other available CBGs for transmission.

In this way, the access network device transmits the data of the XR video based on the type of the data packet and the correspondence, so that the user can restore data of the video frame data packet as much as possible based on parameter information in the neural network data packet, to ensure that the user watches a high-definition video as much as possible.

For example, in a transmission process of an XR video, when a quantity of first video frame data packets is equal to a quantity of first neural network frame data packets, an ARP of the first QoS flow is higher than that of the second QoS flow. There are five groups of to-be-sent data packets of the XR video, and each group includes one first video frame data packet and one first neural network data packet. The access network device may separately preferentially map the five video frame data packets carried on the first QoS flow to one or more CBGs for preferential transmission, and then separately map the five neural network data packets of the five groups and that are carried on the second QoS flow to other available CBGs for transmission.

In this way, the access network device transmits the data of the XR video based on the type of the data packet and the correspondence, so that the user receives the video frame data packet as much as possible, to ensure that the user can watch the video.

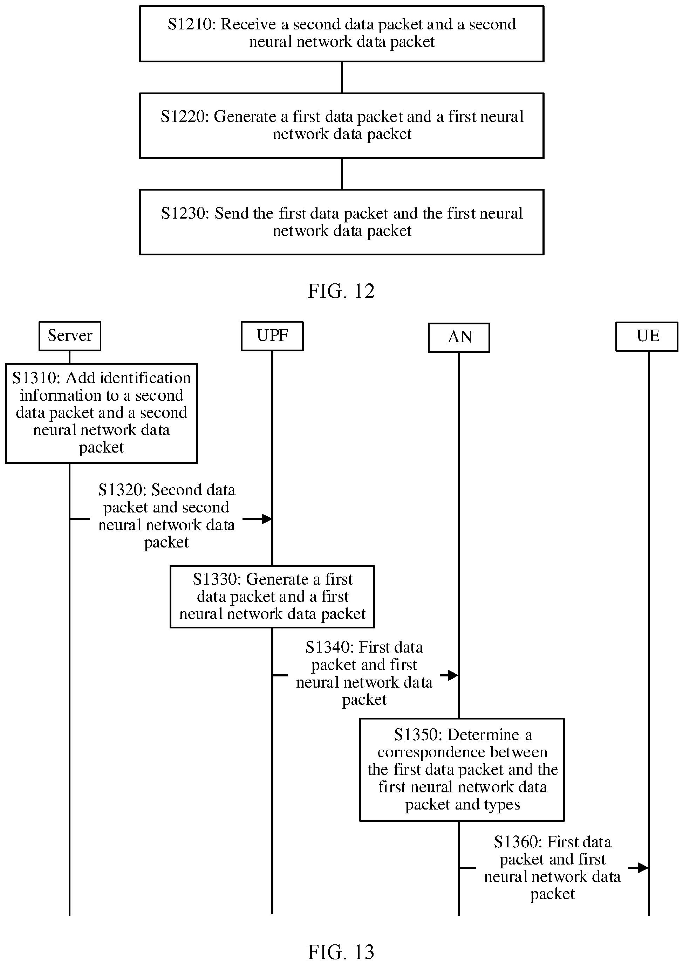

FIG. 12 is a schematic flowchart of a data transmission method according to an embodiment of this application.

The data transmission method in FIG. 12 may be performed by a user plane function UPF network element, or may be performed by a component (for example, a processor, a chip, or a chip system) of the UPF network element, or may be implemented by a logical module or software that can implement all or some functions of the UPF network element. This is not limited in this application.

Data transmission in this application may be video data transmission, audio data transmission, or transmission of another type of data. Atype of data to be transmitted is not limited in this embodiment of this application.

S1210: Receive a second data packet and a second neural network data packet.

The second data packet and the second neural network data packet each include first information, and the first information indicates a type and a group of the second data packet and a type and a group of the second neural network data packet.

The first information indicates the type and the group of the second data packet and the type and the group of the second neural network data packet. It may be understood that the first information includes type information and group information. The type information indicates a type of the second data packet and a type of the second neural network data packet, that is, whether the type of the data packet is a second data packet or a neural network data packet. The group information indicates a group of the second data packet and a group of the second neural network data packet, and data of a second data packet may be restored based on parameter information in a second neural network data packet in a same group.

For example, in a data transmission process of an XR video, the second data packet may be a second video frame data packet. The UPF network element receives the second video frame data packet and the second neural network data packet. The UPF may determine, based on the type information in the first information, whether the type of the data packet is a video frame data packet or a neural network data packet. The UPF network element may further determine the group of the second video frame data packet and the group of the second neural network data packet based on the group information in the first information. Data of a second video frame data packet may be restored based on parameter information in a second neural network data packet in a same group.

For example, the second data packet and the second neural network data packet each include type information.

For example, the type information in the first information may be represented by one bit. If the type information in the data packet is 0, it indicates that the type of the data packet is a second data packet (for example, a video frame data packet), and if the type information in the data packet is 1, it indicates that the type of the data packet is a neural network data packet.

For another example, the type information in the first information may be represented by a letter. If the type information in the data packet is A, it indicates that the type of the data packet is a second data packet (for example, a video frame data packet), and if the type information in the data packet is B, it indicates that the type of the data packet is a neural network data packet.

For example, the second data packet and the second neural network data packet each include group information, and the group information indicates a group of the second data packet and a group of the second neural network data packet.

For example, in a first group, both group information in a second data packet and group information in a second neural network data packet are represented by a number 1; in a second group, both group information in a second data packet and group information in a second neural network may be represented by a number 2; and by analogy. In other words, parameter information in the second neural network data packet whose group information is 1 may be used to restore the second data packet whose group information is 1, and parameter information in the second neural network data packet whose group information is 2 may be used to restore the second data packet whose group information is 2.

For example, the second data packet includes group information, and the group information indicates a group of the second data packet and a group of the second neural network data packet.

Optionally, the second neural network data packet may be an internet protocol (internet protocol, IP) data packet.

For example, there are a total of five second neural network data packets in a first group, and labels of the five IP packets are 1, 2, 3, 4, and 5. A label 1 of a first packet and a label 5 of a last packet are marked as group information in a second data packet in the first group. There are a total of two second neural network data packets in a second group, and labels of the two IP packets are 6 and 7. A label 6 of a first packet and a label 7 of a last packet are marked as group information in a second data packet in the second group. The data packets whose group information is 1 and 5 and the IP data packets whose labels are 1, 2, 3, 4, and 5 belong to a same group, and parameter information in a second neural network data packet in the group may be used to restore data of a second data packet in the group. The data packets whose group information is 6 and 7 and the IP data packets whose labels are 6 and 7 belong to a same group, and parameter information in a second neural network data packet in the group may be used to restore data of a first data packet in the group.

It should be understood that the data packets whose group information is 1 and 5 may be understood as that the group information in the second data packet in the first group is "1" and "5". Alternatively, it may be understood that the group information in the second data packet in the first group is 15, and 15 indicates a number "1" and a number "5", instead of a number "15". The data packets whose group information is 6 and 7 may be understood as that the group information in the second data packet in the second group is "6" and "7". Alternatively, it may be understood that the group information in the second data packet in the second group is 67, and 67 indicates a number "6" and a number "7", instead of a number "67".

For example, the second neural network data packet includes group information, and the group information indicates a group of the second data packet and a group of the second neural network data packet.

Optionally, the second data packet may be an IP data packet.

For example, there are a total of two second data packets in a first group, and labels of the two IP packets are 1 and 2. A label 1 of a first packet and a label 2 of a last packet are marked as group information in a second neural network data packet in the first group. There are a total of four second data packets in a second group, and labels of the four IP packets are 3, 4, 5, and 6. A label 3 of a first packet and a label 6 of a last packet are marked as group information in a second neural network data packet in the second group. The data packets whose group information is 1 and 2 and the IP data packets whose labels are 1 and 2 belong to a same group, and parameter information in a second neural network data packet in the group may be used to restore data of a second data packet in the group. The data packets whose group information is 3 and 6 and the IP data packets whose labels are 3, 4, 5, and 6 belong to a same group, and parameter information in a second neural network data packet in the group may be used to restore data of a second data packet in the group.

It should be understood that the data packets whose group information is 1 and 2 may be understood as that the group information in the second neural network data packet in the first group is "1" and "2". Alternatively, it may be understood that the group information in the second neural network data packet in the first group is 12, and 12 indicates a number "1" and a number "2", instead of a number "12". The data packets whose group information is 3 and 6 may be understood as that the group information in the second neural network data packet in the second group is "3" and "6". Alternatively, it may be understood that the group information in the second neural network data packet in the second group is 36, and 36 indicates a number "3" and a number "6", instead of a number "36".

Alternatively, the first information may be represented in another manner. The representation manner of the first information in this embodiment of this application is merely an example, and is not limited.

In some implementations, the second data packet may be a real-time transport protocol (real-time transport protocol, RTP) data packet, may be a user datagram protocol (user datagram protocol, UDP) data packet, or may be a first protocol layer data packet, and a first protocol layer is a protocol layer between an RTP and a UDP.

In some implementations, the second neural network data packet may be an RTP data packet, a UDP data packet, or a first protocol layer data packet, and a first protocol layer is a protocol layer between an RTP and a UDP.

S1220: Generate a first data packet and a first neural network data packet.

The first neural network data packet is used to carry neural network parameter information, the neural network parameter information is used to process data of the first data packet, the first data packet includes first identification information, the first neural network data packet includes second identification information, and the first identification information and the second identification information each indicate a correspondence between the first data packet and the first neural network data packet.

The first identification information and the second identification information each may indicate the correspondence between the first data packet and the first neural network data packet, that is, indicates a specific neural network data packet whose parameter information may be used to restore data of a specific first data packet. Alternatively, it may be understood as that the first identification information and the second identification information each may indicate a grouping status of the first data packet and a grouping status of the neural network data packet, and data of a first data packet may be restored based on parameter information in a neural network data packet in a same group.

In some implementations, the first data packet and the first neural network data packet each may be a general packet radio service tunneling protocol-user plane part GTP-U data packet.

The UPF network element may generate the first data packet and the first neural network data packet based on the second data packet and the second neural network data packet. For example, in a data transmission process of an XR video, the second video frame data packet and the second neural network data packet that are received by the UPF network element each may be a real-time transport protocol RTP data packet. The UPF network element may generate a GTP-U first video frame data packet based on an RTP second video frame data packet. The UPF network element may further generate a GTP-U first neural network data packet based on an RTP second neural network data packet.

For example, in a data transmission process, the UPF network element may determine the first identification information and the second identification information based on the first information. Then, the UPF network element may add the first identification information to the first data packet, and add the second identification information to the first neural network data packet.

Optionally, in each group, first identification information in a first data packet and second identification information in a first neural network data packet may be represented by a same number. For example, in a first group, both first identification information in a first data packet and second identification information in a first neural network data packet are represented by a number 1; in a second group, both first identification information in a first data packet and second identification information in a first neural network may be represented by a number 2; and by analogy. In other words, parameter information in the first neural network data packet whose second identification information is 1 may be used to restore the first data packet whose first identification information is 1, and parameter information in the first neural network data packet whose second identification information is 2 may be used to restore the first data packet whose first identification information is 2.

Optionally, in each group, first identification information in a first data packet and second identification information in a first neural network data packet may also be represented by different numbers. For example, the first identification information is represented by an odd number, the second identification information is represented by an even number, and twice of first identification information in a same group is second identification information. In a first group, first identification information in a first data packet is 1, and second identification information in a first neural network data packet is 2. It indicates that the data packet whose identification information is 1 and the data packet whose identification information is 2 belong to a same group, and parameter information in a first neural network data packet in the group may be used to restore data of a first data packet in the group. In a second group, first identification information in a first data packet is 3, and second identification information in a first neural network is 6. It indicates that the data packet whose identification information is 3 and the data packet whose identification information is 6 belong to a same group, and parameter information in a first neural network data packet may be used to restore data of a first data packet in the group. The rule applies.

Alternatively, the first identification information and the second identification information may be represented in another manner. The representation manners of the first identification information and the second identification information in this embodiment of this application are merely used as examples and are not limited.

Certainly, there are other different quantities of first data packets and first neural network data packets in each group. This is merely an example and is not limited in this embodiment of this application.

In some implementations, the first data packet and the first neural network data packet may be sent/received in a specific sequence, and first and last sent/received data packets in each group include the first identification information and the second identification information.

The UPF may add the first identification information and the second identification information to the first and last sent data packets in each group.

For example, a sending sequence of data packets is as follows: a first group (one first neural network data packet, one first data packet, one first data packet, one first neural network data packet, and one first data packet), a second group (one first neural network data packet, one first data packet, one first data packet, one first data packet, and one first neural network data packet), and a third group (one first data packet, one first data packet, one first data packet, one first neural network data packet, and one first data packet).

In the first group, second identification information 1 may be added to the first sent first neural network data packet, and first identification information 1 may be added to the last sent first data packet. In the second group, second identification information 2 may be added to the first sent first neural network data packet and the last first sent first neural network data packet. In the third group, first identification information 3 may be added to the first sent first data packet and the last sent first data packet. In other words, the first and last sent data packets whose identification information is 1 and data packets between the first and the last sent data packets belong to a same group. The first and last sent data packets whose identification information is 2 and data packets between the first and the last sent data packets belong to a same group. The first and last sent data packets whose identification information is 3 and data packets between the first and the last sent data packets belong to a same group.

Alternatively, the first identification information and the second identification information may be represented in another manner. The representation manners of the first identification information and the second identification information in this embodiment of this application are merely used as examples and are not limited.

It should be understood that there may alternatively be other different quantities of first data packets and first neural network data packets in each group. This is merely an example and is not limited in this embodiment of this application.

In some implementations, the first data packet includes first identification information, and the first identification information indicates a correspondence between the first data packet and the first neural network data packet.

For example, in a transmission process of an XR video, the first data packet may be a first video frame data packet. The UPF network element may determine first identification information based on the first information, and the first identification information indicates a correspondence between the first video frame data packet and the first neural network data packet. The UPF network element may add the first identification information to the first data packet.

For example, present information in a first neural network data packet in each group, for example, a sequence number of a GTP-U data packet, is placed in first identification information in a first data packet in a same group. For example, there are a total of five first neural network data packets (GTP-U data packets) in a first group, and labels of the five GTP-U data packets are 1, 2, 3, 4, and 5. A label 1 of a first packet and a label 5 of a last packet are marked as first identification information in a first data packet in the first group. In other words, the data packets whose first identification information is 1 and 5 and the GTP-U data packets whose labels are 1, 2, 3, 4, and 5 belong to a same group, and parameter information in a first neural network data packet in the group may be used to restore data of a first data packet in the group. There are a total of two first neural network data packets (GTP-U data packets) in a second group, and labels of the two GTP-U data packets are 6 and 7. A label 6 of a first packet and a label 7 of a last packet are marked as first identification information in a first data packet in the second group. In other words, the data packets whose first identification information is 6 and 7 and the GTP-U data packets whose labels are 6 and 7 belong to a same group, and parameter information in a first neural network data packet in the group may be used to restore data of a first data packet in the group.

It should be understood that the data packets whose first identification information is 1 and 5 may be understood as that the first identification information in the first data packet in the first group is "1" and "5". Alternatively, it may be understood that the first identification information in the first data packet in the first group is 15, and 15 indicates a number "1" and a number "5", instead of a number "15". The data packets whose first identification information is 6 and 7 may be understood as that the first identification information in the first data packet in the second group is "6" and "7". Alternatively, it may be understood that the first identification information in the first data packet in the second group is 67, and 67 indicates a number "6" and a number "7", instead of a number "67".

Alternatively, the first identification information may be represented in another manner. The representation manner of the first identification information in this embodiment of this application is merely an example and is not limited.

Certainly, there may alternatively be other quantities of first data packets and first neural network data packets in each group. This is merely an example and is not limited in this embodiment of this application.

In some implementations, the first neural network data packet includes second identification information, and the second identification information indicates a correspondence between the first data packet and the first neural network data packet.

For example, in a data transmission process, the UPF may determine second identification information based on the first information, and the second identification information indicates a correspondence between the first data packet and the first neural network data packet. The UPF adds the second identification information to the first neural network data packet.

For example, present information in a first data packet in each group, for example, a sequence number of a GTP-U data packet, is placed in second identification information in a first neural network data packet in a same group. For example, there are a total of two first data packets (GTP-U data packets) in a first group, and labels of the two GTP-U data packets are 1 and 2. A label 1 of a first packet and a label 2 of a last packet are marked as second identification information in a first neural network data packet in the first group. In other words, the data packets whose second identification information is 1 and 2 and the GTP-U data packets whose labels are 1 and 2 belong to a same group, and parameter information in a first neural network data packet in the group may be used to restore data of a first data packet in the group. For example, there are a total of four first data packets (GTP-U data packets) in a second group, and labels of the four GTP-U data packets are 3, 4, 5, and 6. A label 3 of a first packet and a label 6 of a last packet are marked as first identification information in a first data packet in the second group. In other words, the data packets whose first identification information is 3 and 6 and the GTP-U data packets whose labels are 3, 4, 5, and 6 belong to a same group, and parameter information in a first neural network data packet in the group may be used to restore data of a first data packet in the group.

It should be understood that the data packets whose second identification information is 1 and 2 may be understood as that the second identification information in the first neural network data packet in the first group is "1" and "2". Alternatively, it may be understood that the second identification information in the first neural network data packet in the first group is 12, and 12 indicates a number "1" and a number "2", instead of a number "12". The data packets whose second identification information is 3 and 6 may be understood as that the second identification information in the first neural network data packet in the second group is "3" and "6". Alternatively, it may be understood that the second identification information in the first neural network data packet in the second group is 36, and 36 indicates a number "3" and a number "6", instead of a number "36".

Alternatively, the second identification information may be represented in another manner. The representation manner of the second identification information in this embodiment of this application is merely an example and is not limited.

Certainly, there may alternatively be other quantities of first data packets and first neural network data packets in each group. This is merely an example and is not limited in this embodiment of this application.

In some implementations, the first data packet further includes first type information. The first type information may indicate a type of the first data packet, that is, indicate that which data packet is the first data packet.

For example, the UPF network element may determine the first type information based on the first information. The UPF network element may add the first type information to the first data packet.

For example, the first type information in the first data packet may be represented by a number. For example, in a data transmission process of an XR video, the first data packet may be a first video frame data packet, and first type information in the first video frame data packet may be represented by a number 1, to indicate that a type of a data packet whose type information is 1 is a video frame data packet.

For example, the first type information in the first data packet may be represented by a letter. For example, in a data transmission process of an XR video, the first data packet may be a first video frame data packet. The first type information in the first video frame data packet may be represented by a letter A, to indicate that a type of a data packet whose type information is A is a video frame data packet.

Alternatively, the first type information may be represented in another manner. The representation manner of the first type information in this embodiment of this application is merely used as an example and is not limited.

In some implementations, the first neural network data packet further includes second type information. The second identification information indicates a type of the first neural network data packet, that is, indicates that which data packet is a first neural network data packet.

The UPF network element may determine the second type information based on the first information. The UPF network element may add the second type information to the first neural network data packet.

For example, the second type information may be represented by a number. For example, in a data transmission process of an XR video, the second type information in the first neural network data packet may be represented by a number 2, to indicate that a type of a data packet whose type information is 2 is a neural network data packet.

For example, the second type information may be represented by a letter. For example, in a data transmission process of an XR video, the second type information in the first neural network data packet may be represented by a letter B, to indicate that a type of a data packet whose type information is B is a neural network data packet.

Alternatively, the second type information may be represented in another manner. This is merely an example and is not limited in this embodiment of this application.

Alternatively, the first type information and the second type information may be represented in another manner. This is merely an example and is not limited in this embodiment of this application.

S 1230: Send the first data packet and the first neural network data packet.

In some implementations, the UPF may map the first data packet to a first QoS flow, and map the first neural network data packet to a second QoS flow. Then, the UPF sends the first QoS flow and the second QoS flow to an access network device.

For example, in a data transmission process of an XR video, the UPF may determine, based on the first information, whether the type of the data packet is a video frame data packet or a neural network data packet; and map the first video frame data packet to the first QoS flow, and map the first neural network data packet to the second QoS flow. Then, the first QoS flow and the second QoS flow are sent to the access network device.

In some implementations, the UPF may map the first data packet and the first neural network data packet to a same QoS flow, and then send the QoS flow to the access network device.

FIG. 13 is a diagram of a data transmission method according to an embodiment.

Data transmission in this application may be video data transmission, audio data transmission, or transmission of another type of data. Atype of data to be transmitted is not limited in this embodiment of this application.

S 1310: A server adds first information to a second video frame data packet and a second neural network data packet.

The second data packet and the second neural network data packet each include first information, and the first information indicates a type and a group of the second data packet and a type and a group of the second neural network data packet.

The first information indicates the type and the group of the second data packet and the type and the group of the second neural network data packet. It may be understood that the first information includes type information and group information. The type information indicates a type of the second data packet and a type of the second neural network data packet, that is, whether the type of the data packet is a second data packet or a second neural network data packet. The group information indicates a group of the second data packet and a group of the second neural network data packet, and data of a second data packet may be restored based on parameter information in a second neural network data packet in a same group.

For example, the second data packet and the second neural network data packet each include type information.

For example, the second data packet and the second neural network data packet each include group information. The group information indicates a group of the second data packet and a group of the second neural network data packet, and data of a second data packet may be restored based on parameter information in a second neural network data packet in a same group.

For example, the second data packet includes group information. The group information indicates a group of the second data packet and a group of the second neural network data packet, and data of a second data packet may be restored based on parameter information in a second neural network data packet in a same group.

For example, the second neural network data packet includes group information. The group information indicates a group of the second data packet and a group of the second neural network data packet, and data of a second data packet may be restored based on parameter information in a second neural network data packet in a same group.

Alternatively, the first information may be represented in another manner. The representation manner of the first information in this embodiment of this application is merely an example, and is not limited.

For representation manners of the type information and the group information in the first information, refer to the representation manners of the type information and the group information in the first information in S1210. Details are not described herein again.

In some implementations, the second data packet may be an RTP data packet, a UDP data packet, or a first protocol layer data packet, and a first protocol layer is a protocol layer between an RTP and a UDP.

In some implementations, the second neural network data packet may be an RTP data packet, a UDP data packet, or a first protocol layer data packet, and a first protocol layer is a protocol layer between an RTP and a UDP.

S 1320: The server sends the second data packet and the second neural network data packet to a UPF network element.

Correspondingly, the UPF receives the second data packet and the second neural network data packet.

For related descriptions of receiving the second data packet and the second neural network data packet by the UPF, refer to step S1210. Details are not described herein again.

S1330: The UPF generates a first data packet and a first neural network data packet.

The first neural network data packet is used to carry neural network parameter information, the neural network parameter information is used to process data of the first data packet, the first data packet includes first identification information, the first neural network data packet includes second identification information, and the first identification information and the second identification information each indicate a correspondence between the first data packet and the first neural network data packet.

For related descriptions of generating the first data packet and the first neural network data packet, refer to S1220. Details are not described herein again.

S1340: The UPF sends the first data packet and the first neural network data packet.

Correspondingly, an access network device receives the first data packet and the first neural network data packet.

The UPF network element maps the first data packet and the first neural network data packet to a same QoS flow for sending.

In addition, for related descriptions of receiving the first data packet and the first neural network data packet by the access network device, refer to step S1110. Details are not described herein again.

S1350: The access network device determines the correspondence between the first data packet and the first neural network data packet and types.

In some implementations, the access network device determines the correspondence between the first data packet and the first neural network data packet based on the first identification information and the second identification information. Alternatively, the access network device determines a grouping status of the first data packet and a grouping status of the first neural network data packet based on the first identification information and the second identification information, and data of a first data packet may be restored based on parameter information in a first neural network data packet in a same group.

For example, the access network device may further determine the correspondence between the first data packet and the first neural network data packet based on the first identification information and the second identification information. In a first group, both first identification information in a first data packet and second identification information in a first neural network data packet are represented by a number 1; in a second group, both first identification information in a first data packet and second identification information in a first neural network may be represented by a number 2; and by analogy. The access network device may determine, based on the first identification information and the second identification information, that the data packet whose first identification information is 1 and the data packet whose second identification information is 1 belong to a same group, and parameter information in a first neural network data packet in the group may be used to restore data of a first data packet in the group. The access network device may determine, based on the first identification information and the second identification information, that the data packet whose first identification information is 2 and the data packet whose second identification information is 2 belong to a same group, and parameter information in a first neural network data packet may be used to restore data of a first data packet in the group.

In some implementations, the access network device determines the correspondence between the first data packet and the first neural network data packet based on the first identification information. Alternatively, the access network device determines a grouping status of the first data packet and a grouping status of the first neural network data packet based on the first identification information, and data of a first data packet may be restored based on parameter information in a first neural network data packet in a same group.

For example, the access network device may determine the correspondence between the first data packet and the first neural network data packet based on the first identification information. There are a total of five first neural network data packets (GTP-U data packets) in a first group, and labels of the five GTP-U data packets are 1, 2, 3, 4, and 5. A label 1 of a first packet and a label 5 of a last packet are marked as first identification information in a first data packet in the first group. There are a total of two first neural network data packets (GTP-U data packets) in a second group, and labels of the two GTP-U data packets are 6 and 7. A label 6 of a first packet and a label 7 of a last packet are marked as first identification information in a first data packet in the second group. The access network device may determine, based on the first identification information, that the data packets whose first identification information is 1 and 5 and the GTP-U data packets whose labels are 1, 2, 3, 4, and 5 belong to a same group, and parameter information in a first neural network data packet in the group may be used to restore data of a first data packet in the group. The access network device may determine, based on the first identification information, that the data packets whose first identification information is 6 and 7 and the GTP-U data packets whose labels are 6 and 7 belong to a same group, and parameter information in a first neural network data packet in the group may be used to restore data of a first data packet in the group.

It should be understood that the data packets whose first identification information is 1 and 5 may be understood as that the first identification information in the first data packet in the first group is "1" and "5". Alternatively, it may be understood that the first identification information in the first data packet in the first group is 15, and 15 indicates a number "1" and a number "5", instead of a number "15". The data packets whose first identification information is 6 and 7 may be understood as that the first identification information in the first data packet in the second group is "6" and "7". Alternatively, it may be understood that the first identification information in the first data packet in the second group is 67, and 67 indicates a number "6" and a number "7", instead of a number "67".

In some implementations, the access network device determines the correspondence between the first data packet and the first neural network data packet based on the second identification information. Alternatively, the access network device determines a grouping status of the first data packet and a grouping status of the first neural network data packet based on the second identification information, and data of a first data packet may be restored based on parameter information in a first neural network data packet in a same group.

For example, the access network device may determine the correspondence between the first data packet and the first neural network data packet based on the second identification information. There are a total of two first data packets (GTP-U data packets) in a first group, and labels of the two GTP-U data packets are 1 and 2. A label 1 of a first packet and a label 2 of a last packet are marked as second identification information in a first neural network data packet in the first group. There are a total of four first data packets (GTP-U data packets) in a second group, and labels of the four GTP-U data packets are 3, 4, 5, and 6. A label 3 of a first packet and a label 6 of a last packet are marked as first identification information in a first data packet. The access network device may determine, based on the second identification information, that the data packets whose second identification information is 1 and 2 and the GTP-U data packets whose labels are 1 and 2 belong to a same group, and parameter information in a first neural network data packet in the group may be used to restore data of a first data packet in the group. The access network device may further determine, based on the second identification information, that the data packets whose second identification information is 3 and 6 and the GTP-U data packets whose labels are 3, 4, 5, and 6 belong to a same group, and parameter information in a first neural network data packet in the group may be used to restore data of a first data packet in the group.

It should be understood that the data packets whose second identification information is 1 and 2 may be understood as that the second identification information in the first neural network data packet in the first group is "1" and "2". Alternatively, it may be understood that the second identification information in the first neural network data packet in the first group is 12, and 12 indicates a number "1" and a number "2", instead of a number "12". The data packets whose second identification information is 3 and 6 may be understood as that the second identification information in the first neural network data packet in the second group is "3" and "6". Alternatively, it may be understood that the second identification information in the first neural network data packet in the second group is 36, and 36 indicates a number "3" and a number "6", instead of a number "36".

In some implementations, the access network device may determine the type of the first data packet based on the first type information.

For example, in a data transmission process of an XR video, the first video frame data packet further includes first type information, and the first type information indicates a type of the first video frame data packet. The first type information in the data packet in the first video frame is represented by 1. The access network device may determine, based on the first type information, that a type of the data packet whose first type information is 1 is a video frame data packet.

In some implementations, the access network device may determine the type of the first neural network data packet based on the second type information.

For example, in a data transmission process of an XR video, the first neural network data packet includes second type information, and the second type information indicates a type of the first neural network data packet. The second type information is represented by B. The access network device determines, based on the second type information, that a type of the data packet whose type identifier is B is a neural network data packet.

In this embodiment of this application, the representation manners of the first identification information and the second identification information, and the first type information and the second type information are merely used as examples, and are not limited.

S1360: The access network device sends the first data packet and the first neural network data packet.

In a data transmission process of an XR video, the first data packet may be a first video frame data packet.

For example, when a quantity of first neural network data packets is equal to a quantity of first video frame data packets, and channel quality is poor, the access network device may ensure sending of the first video frame data packet as much as possible. In this way, transmission resources can be saved, so that UE can watch a low-definition video image, thereby ensuring basic UE experience.

There are five groups of to-be-sent data packets of the XR video, and each group includes one video frame data packet and one neural network data packet. Only nine data packets can be sent based on current channel quality. In this case, the access network device may send five first video frame data packets and four first neural network data packets of the five groups.

The access network device may send the data packet of the XR video based on the type of the data packet and the correspondence, so that when channel quality is poor, the UE can watch a low-definition video picture, thereby ensuring basic user experience.

For example, when a quantity of first neural network data packets is less than a quantity of first video frame data packets, and channel quality is good, the access network device may ensure sending of the first neural network data packet as much as possible. In this way, a user can restore the high-definition video as much as possible, thereby ensuring UE experience.

There are two groups of to-be-sent data packets of the XR video, and each group includes one neural network data packet and 10 video frame data packets. When the channel quality is good, neural network data packets of the two groups should be preferentially sent, and then video frame data packets of the two groups should be sent.

In this way, the access network device may send the data packet of the XR video based on the type of the data packet and the correspondence, so that when the channel quality is good, it can be ensured that the user may restore a high-definition video as much as possible, thereby ensuring UE experience.

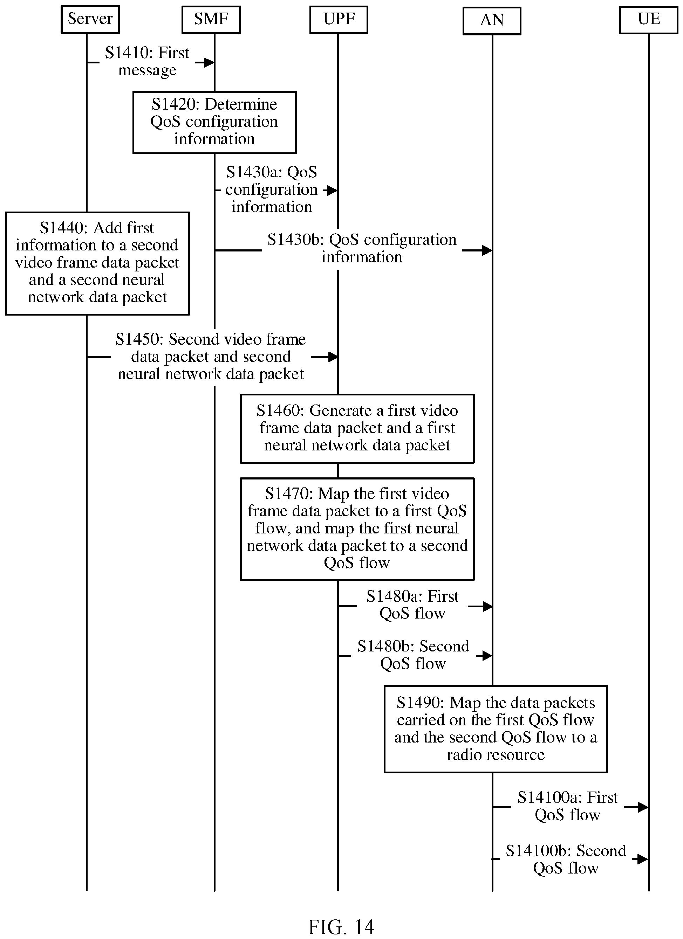

FIG. 14 is a diagram of a data transmission method according to an embodiment.

Data transmission in this application may be video data transmission, audio data transmission, or transmission of another type of data. A type of data to be transmitted is not limited in this embodiment of this application.

S1410: A server sends a first message to an SMF network element.

The first message includes QoS configuration request information and data packet quantity information, the data packet quantity information indicates a quantity of second data packets and a quantity of second neural network data packets, and the QoS flow configuration request information is used to request that the second data packet and the neural network data packet are carried on two QoS flows respectively.

For example, in a transmission process of an XR video, the second data packet may be a second video frame data packet. The data packet quantity information may indicate a quantity of second video frame data packets and a quantity of second neural network data packets, and the QoS flow configuration request information is used to request that the video frame data packet and the neural network data packet are carried on two QoS flows respectively.

It should be understood that the server may send the first message to the SMF network element through an AF, or the server may send the first message to the SMF network element in another manner. This is not limited in this embodiment of this application.

S 1420: The SMF network element determines QoS configuration information based on the first message.

The QoS configuration information indicates that a first QoS flow is used to carry the second data packet, and the second QoS flow is used to carry the neural network data packet.

The first QoS flow is used to carry the second data packet, and the second QoS flow is used to carry the neural network data packet. It may be understood that the first QoS flow and the second QoS flow carry different types of data packets, the type of the data packet carried on the first QoS flow is a second data packet (for example, a video frame data packet or an audio data packet), and the type of the data packet carried on the second QoS flow is a neural network data packet.

When a quantity of second data packets is greater than a quantity of second neural network data packets, an ARP of the second QoS flow is higher than that of the first QoS flow.

For example, in a transmission process of an XR video, when a quantity of second video frame data packets is greater than a quantity of second neural network data packets, an ARP of the second QoS flow is higher than that of the first QoS flow. In this way, it can be ensured that the neural network data packet is sent, that a user can receive the neural network data packet as much as possible, and that UE can watch a high-definition video to some extent.

When a quantity of second data packets is equal to a quantity of second neural network frame data packets, an ARP of the first QoS flow is higher than that of the second QoS flow.

For example, in a transmission process of an XR video, when a quantity of second video frame data packets is equal to a quantity of second neural network frame data packets, an ARP of the first QoS flow is higher than that of the second QoS flow. In this way, it can be ensured that the video frame data packet is sent, that the user can receive the video frame data packet as much as possible, and that the user can watch a video picture.

S1430a: The SMF network element sends the QoS configuration information to the UPF network element.

Correspondingly, the UPF network element receives the QoS configuration information.

S1430b: The SMF network element sends the QoS configuration to the access network device.

Correspondingly, the access network device receives the QoS configuration.

For example, in a transmission process of an XR video, the QoS configuration information indicates that the first QoS flow is used to carry the video frame data packet, and the second QoS flow is used to carry the neural network data packet.

It should be understood that the QoS flow is controlled by the SMF network element in a core network. The SMF may provide the QoS configuration information for the UPF through an N4 interface, and the QoS configuration information on the UPF side may be a PDR. The SMF may further send the QoS configuration to the access network device through an N2 interface, and the QoS configuration information on the access network device side may be the QoS configuration.

It should be noted that there is no sequence between step 1430a and step 1430b.

S1440: The server adds first information to the second data packet and the second neural network data packet.

For related descriptions of adding the first information to the second data packet and the second neural network data packet, refer to step S1310. Details are not described herein again.

In some implementations, the second data packet may be an RTP data packet, a UDP data packet, or a first protocol layer data packet, and a first protocol layer is a protocol layer between an RTP and a UDP.

In some implementations, the second neural network data packet may be an RTP data packet, a UDP data packet, or a first protocol layer data packet, and a first protocol layer is a protocol layer between an RTP and a UDP. S1450: The server sends the second data packet and the second neural network data packet to the UPF network element.

Correspondingly, the UPF receives the second data packet and the second neural network data packet.

S1460: The UPF network element generates a first data packet and a first neural network data packet.

The first neural network data packet is used to carry neural network parameter information, the neural network parameter information is used to process data of the first data packet, the first data packet includes first identification information, the first neural network data packet includes second identification information, and the first identification information and the second identification information each indicate a correspondence between the first data packet and the first neural network data packet.

For related descriptions of generating the first data packet and the first neural network data packet, refer to step S 1220. Details are not described herein again.

S1470: The UPF maps the first data packet to the first QoS flow, and maps the first neural network data packet to the second QoS flow.

It should be understood that, after determining the QoS configuration information, the SMF may send the QoS configuration information to the UPF through an N4 interface. The QoS configuration information on the UPF side may be the PDR.

In some implementations, the UPF maps the first data packet to the first QoS flow and maps the first neural network data packet to the second QoS flow based on the QoS configuration information.

For example, in a data transmission process of an XR video, the UPF may map the first video frame data packet to the first QoS flow and map the first neural network data packet to the second QoS flow based on the QoS configuration information.

S 1480a: The UPF network element sends the first QoS flow to the access network device.

Correspondingly, the access network device receives the first QoS flow.

S1480b: The UPF network element sends the second QoS flow to the access network device.

Correspondingly, the access network device receives the second QoS flow.

For example, when a quantity of first data packets is greater than a quantity of first neural network data packets, an ARP of the second QoS flow is higher than that of the first QoS flow.

For example, in a data transmission process of an XR video, the first data packet may be a first video frame data packet. There are two groups of to-be-sent data packets of the XR video. Each group includes 10 first video frame data packets and one first neural network data packet. The UPF may preferentially map the first neural network data packets of the two groups to the second QoS flow, and preferentially send the second QoS flow to the access network device. Then, the UPF maps the first video frame data packets of the two groups to the first QoS flow for sending. In this way, it can be ensured that the neural network data packet is sent, so that the user can use the neural network data packet to restore video frame data, to ensure that the UE can watch a high-definition video to some extent.

It should be understood that, in a process of mapping and sending the two groups of data packets, the UPF receives another video frame data packet and another neural network data packet. The UPF may still preferentially map the first neural network data packets of the two groups to the second QoS flow, and preferentially send the second QoS flow to the access network device. Then, the UPF maps the video frame data packets of the two groups to the first QoS flow for sending.

For example, when a quantity of first data packets is equal to a quantity of first neural network frame data packets, an ARP of the first QoS flow is higher than that of the second QoS flow.

For example, in a data transmission process of an XR video, the first data packet may be a first video frame data packet. There are five groups of to-be-sent data packets of the XR video. Each group of data packets includes one first video frame data packet and one first neural network data packet. The UPF may preferentially map the first video frame data packets of the five groups to the first QoS flow, and preferentially send the first QoS flow to the access network device. Then, the UPF maps the first neural network data packets of the five groups to the second QoS flow for sending. In this way, it can be ensured that the video frame data packet is sent, that the user can receive the video frame data packet as much as possible, and that the user can watch a video.

It should be understood that, in a process of mapping and sending the five groups of data packets, the UPF receives another video frame data packet and another neural network data packet. The UPF may still preferentially map the first video frame data packets of the five groups to the first QoS flow, and preferentially send the first QoS flow to the access network device. Then, the UPF maps the first video frame data packets of the five groups to the second QoS flow for sending.

S1490: The access network device maps, to a radio resource based on the first identification information and the second identification information, the data packets carried on the first QoS flow and the second QoS flow.

The first identification information and the second identification information each indicate the correspondence between the first data packet and the first neural network data packet. That the access network device maps, to the radio resource based on the first identification information and the second identification information, the data packets carried on the first QoS flow and the second QoS flow may also be understood as that the access network device may map, to the radio resource based on the correspondence between the first data packet and the first neural network data packet, the data packets carried on the first QoS flow and the second QoS flow.

In some implementations, the first identification information may also indicate the correspondence between the first data packet and the first neural network data packet. In this case, the access network device may map, to a radio resource based on the first identification information, the data packets carried on the first QoS flow and the second QoS flow.

For example, the access network device may map the data packets carried on the first QoS flow and the second QoS flow to different CBGs of a TB for transmission.

For example, in a transmission process of an XR video, when a quantity of first video frame data packets is greater than a quantity of first neural network data packets, an ARP of the second QoS flow is higher than that of the first QoS flow. One group of to-be-sent data packets of the XR video includes 50 video frame data packets and one neural network data packet. The access network device may preferentially map one neural network data packet carried on the second QoS flow to one or more CBGs for preferential transmission. Then, the access network device may further map the video frame data packets of the group that are carried on the first QoS flow to other available CBGs for transmission.

In this way, the access network device maps and transmits the data of the XR video based on the type of the data packet and the correspondence, so that the user can restore data of the video frame data packet as much as possible based on parameter information in the neural network data packet, to ensure that the user watches a high-definition video as much as possible.

For another example, in a transmission process of an XR video, when a quantity of first video frame data packets is equal to a quantity of first neural network frame data packets, an ARP of the first QoS flow is higher than that of the second QoS flow. There are five groups of to-be-sent data packets of the XR video, and each group includes one video frame data packet and one neural network data packet. The access network device may separately preferentially map the five video frame data packets carried on the first QoS flow to one or more CBGs for preferential transmission, and then separately map the five neural network data packets of the five groups and that are carried on the second QoS flow to other available CBGs for transmission.

In this way, the access network device maps and transmits the data of the XR video based on the type of the data packet and the correspondence, so that the user receives the video frame data packet as much as possible, to ensure that the user can watch the video.

S14100a: The access network device sends the first QoS flow to the UE.

S14100b: The access network device sends the second QoS flow to the UE.

It should be understood that the access network device may send the first QoS flow and the second QoS flow on corresponding CBGs.

When a quantity of first data packets is greater than a quantity of first neural network data packets, an ARP of the second QoS flow is higher than that of the first QoS flow. The access network device may preferentially send the second QoS flow on a corresponding CBG, and then may send the first QoS flow on a corresponding CBG.

In this way, the access network device transmits the data of the XR video based on the type of the data packet and the correspondence, so that the user can restore data of the video frame data packet as much as possible based on parameter information in the neural network data packet, to ensure that the user watches a high-definition video as much as possible.

When a quantity of video frame data packets is equal to a quantity of neural network frame data packets, an ARP of the first QoS flow is higher than that of the second QoS flow. The access network device may preferentially send the first QoS flow on a corresponding CBG, and then may send the second QoS flow on a corresponding CBG.

In this way, the access network device transmits the data of the XR video based on the type of the data packet and the correspondence, so that the user receives the video frame data packet as much as possible, to ensure that the user can watch the video.

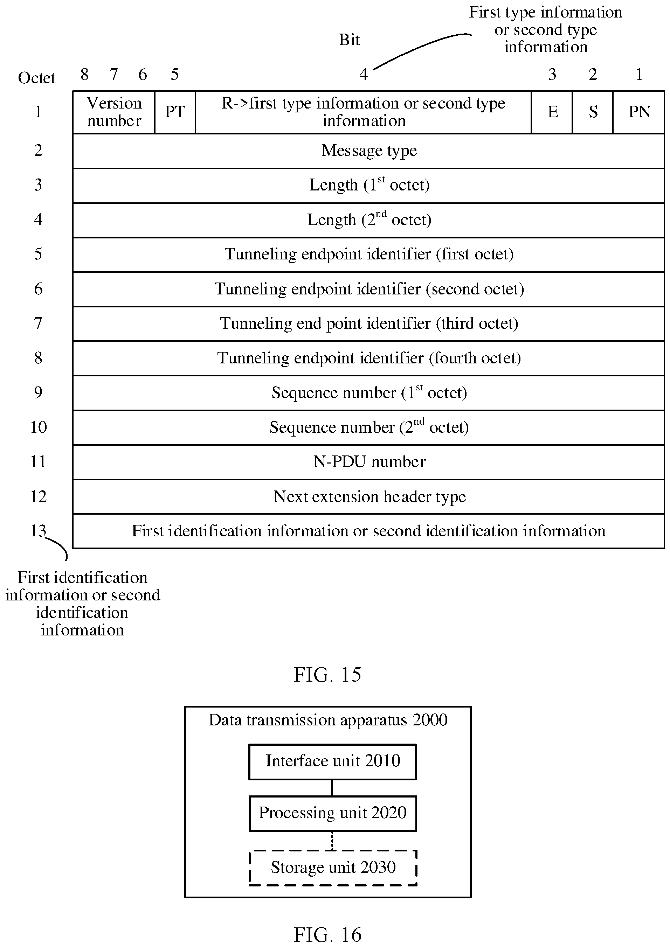

FIG. 15 is a diagram of locations at which first/second identification information and first/second type information are added in a data transmission method according to an embodiment of this application. The following describes a specific addition location with reference to FIG. 15.

The first identification information and/or the second identification information, and the first type information and/or the second type information each may be added to a protocol of a packet header of a data packet, for an access network device to read.

For example, when a first data packet is a GTP-U data packet, first type information in the first data packet may be added to a fourth bit of the GTP-U data packet.

For example, when a first neural network data packet is a GTP-U data packet, second type information in the first neural network data packet may be added to a fourth bit of the GTP-U data packet.

For example, when a first data packet is a GTP-U data packet, a new octet may be added to the GTP-U data packet to add the first identification information.

For example, when a first neural network data packet is a GTP-U data packet, a new octet may be added to the GTP-U data packet to add the second identification information.

Certainly, the first/second identification information and the first/second type information may also be added to another data packet or another location. This is merely an example and is not limited in this application.

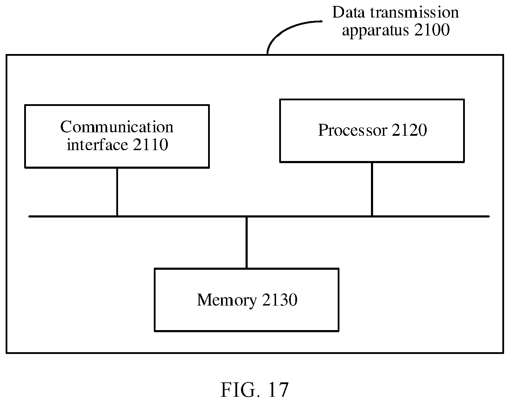

The foregoing describes the data transmission method provided in embodiments of this application with reference to FIG. 1 to FIG. 15. The following describes apparatus embodiments in embodiments of this application with reference to FIG. 16 and FIG. 17. It should be understood that the descriptions of the method embodiments correspond to descriptions of the apparatus embodiments. Therefore, for a part that is not described in detail, refer to the foregoing descriptions.

FIG. 16 is a block diagram of a communication apparatus according to an embodiment of this application. An apparatus 2000 includes an interface unit 2010 and a processing unit 2020. The interface unit 2010 may implement a corresponding communication function, and the processing unit 2020 is configured to perform data processing. The interface unit 2010 may also be referred to as a communication interface or a communication unit.

Optionally, the apparatus 2000 may further include a storage unit 2030, the storage unit may be configured to store instructions and/or data, and the processing unit 2020 may read the instructions and/or the data in the storage unit, so that the apparatus implements the foregoing method embodiments.

In some implementations, the apparatus 2000 may include corresponding units configured to perform the processes of the method in FIG. 11. In addition, the units in the apparatus 2000 and the foregoing other operations and/or functions are respectively used to implement corresponding procedures of the method embodiment in FIG. 11.

For example, the apparatus 2000 is an access network device, and the interface unit 2010 and the processing unit 2020 can support actions completed by the access network device in the foregoing method example.

For example, the interface unit 2010 is configured to receive a first video frame data packet and a first neural network data packet, where the first neural network data packet is used to carry neural network parameter information, the neural network parameter information is used to process data of the first video frame data packet, the first video frame data packet includes first identification information, the first neural network data packet includes second identification information, and the first identification information and the second identification information each indicate a correspondence between the first video frame data packet and the first neural network data packet. The processing unit 2020 is configured to control, based on the first identification information and the second identification information, the interface unit 2010 to send the first video frame data packet and the first neural network data packet.

For example, the first identification information indicates a group of the first video frame data packet.

Optionally, the second identification information indicates a group of the first neural network data packet.

For example, the processing unit 2020 is configured to control, based on the first identification information, the second identification information, and first type information, the interface unit 2010 to send the first video frame data packet and the first neural network data packet.

Optionally, the processing unit 2020 is configured to control, based on the first identification information, the second identification information, and second type information, the interface unit to send the first video frame data packet and the first neural network data packet.

For example, the first video frame data packet is carried on a first quality of service QoS flow; and the first neural network data packet is carried on a second QoS flow.

For example, the processing unit 2020 is configured to map, to a radio resource based on the first identification information and the second identification information, the data packets carried on the first QoS flow and the second QoS flow, and transmit the data packets.

For example, the first video frame data packet and the first neural network data packet are general packet radio service tunneling protocol-user plane GTP-U data packets, and the first identification information and the second identification information are located in a GTP-U protocol of a packet header of the GTP-U data packet.

In some implementations, the apparatus 2000 may include corresponding units configured to perform the processes of the method in FIG. 12. In addition, the units in the apparatus 2000 and the foregoing other operations and/or functions are respectively used to implement corresponding procedures of the method embodiment in FIG. 12.

For example, the apparatus 2000 is a user plane function network element, and the interface unit 2010 and the processing unit 2020 can support actions completed by the user plane function network element in the foregoing method example.

The interface unit 2010 is configured to receive a second video frame data packet and a second neural network data packet of an XR video, where the second video frame data packet and the second neural network data packet each include first information, and the first information indicates a type and a group of the second video frame data packet and a type and a group of the second neural network data packet. The processing unit 2020 is configured to generate a first video frame data packet and a first neural network data packet of the XR video, where the first neural network data packet is used to carry neural network parameter information, the neural network parameter information is used to process data of the first video frame data packet, the first video frame data packet includes first identification information, the first neural network data packet includes second identification information, the first identification information and the second identification information each indicate a correspondence between the first video frame data packet and the first neural network data packet, and the first identification information and the second identification information are determined based on the first information. The interface unit 2010 is configured to send the first video frame data packet and the first neural network data packet.

For example, the first identification information indicates a group of the first video frame data packet.

Optionally, the second identification information indicates a group of the first neural network data packet.

For example, the first video frame data packet further includes first type information, and the first type information indicates a type of the first video frame data packet.

Optionally, the first neural network data packet further includes second type information, and the second type information indicates a type of the first neural network data packet.

For example, the processing unit 2020 is further configured to map the first video frame data packet to a first quality of service QoS flow based on the type of the second video frame data packet. The processing unit 2020 is configured to map the first neural network data packet to a second QoS flow based on the type of the second neural network data packet. The interface unit is configured to send the first quality of service QoS flow and the second QoS flow.

For example, the first video frame data packet and the first neural network data packet are general packet radio service tunneling protocol-user plane GTP-U data packets, and the first identification information and/or the second identification information are located in a GTP-U protocol of a packet header of the GTP-U data packet.

For example, the second video frame data packet is a real-time transport protocol RTP data packet, a user datagram protocol UDP data packet, or a first protocol layer data packet, and a first protocol layer is a protocol layer between an RTP and a UDP.

For example, the second neural network data packet is an RTP data packet, a UDP data packet, or a first protocol layer data packet, and a first protocol layer is a protocol layer between an RTP and a UDP.

The apparatus 2000 may implement steps or procedures performed by a network device or the access network device in the method embodiments corresponding to embodiments of this application. The apparatus 2000 may further include units configured to perform the methods performed by the network device or the access network device in FIG. 13 and FIG. 14. In addition, the units in the apparatus 2000 and the foregoing other operations and/or functions are respectively used to implement corresponding procedures of the method embodiments in FIG. 13 and FIG. 14.

It should be understood that a specific process in which the units perform the foregoing corresponding steps is described in detail in the foregoing method embodiments. For brevity, details are not described herein.

In embodiments of this application, the apparatus in FIG. 16 may alternatively be a chip or a chip system, for example, a system on chip (system on chip, SoC). Correspondingly, the interface unit may be a transceiver circuit of the chip. This is not limited herein.

FIG. 17 is a block diagram of still another communication apparatus according to an embodiment of this application. A communication apparatus 2100 shown in FIG. 17 may include a communication interface 2110, a processor 2120, and a memory 2130. The communication interface 2110, the processor 2120, and the memory 2130 communicate with each other through an internal connection path. The memory 2130 is configured to store instructions. The processor 2120 is configured to execute the instructions stored in the memory 2130, to control the communication interface 2110 to send a signal and/or receive a signal.

Optionally, the memory 2130 may be coupled to the processor 2120 through an interface, or may be integrated with the processor 2120.

It should be noted that the communication interface 2110 uses a transceiver apparatus such as but not limited to a transceiver, to implement communication between the communication apparatus 2100 and another device or a communication network. The communication interface 2110 may further include an input/output interface (input/output interface).

If the communication apparatus 2100 is an access network device, the communication interface 2110 is configured to receive a first video frame data packet and a first neural network data packet, where the first neural network data packet is used to carry neural network parameter information, the neural network parameter information is used to process data of the first video frame data packet, the first video frame data packet includes first identification information, the first neural network data packet includes second identification information, and the first identification information and the second identification information each indicate a correspondence between the first video frame data packet and the first neural network data packet. The processor 2120 is configured to control, based on the first identification information and the second identification information, the interface unit 2010 to send the first video frame data packet and the first neural network data packet.

If the communication apparatus 2100 is a network device (for example, a UPF network element), the communication interface 2110 is configured to receive a second video frame data packet and a second neural network data packet of an XR video, where the second video frame data packet and the second neural network data packet each include first information, and the first information indicates a type and a group of the second video frame data packet and a type and a group of the second neural network data packet. The processor 2120 is configured to generate a first video frame data packet and a first neural network data packet of the XR video, where the first neural network data packet is used to carry neural network parameter information, the neural network parameter information is used to process data of the first video frame data packet, the first video frame data packet includes first identification information, the first neural network data packet includes second identification information, the first identification information and the second identification information each indicate a correspondence between the first video frame data packet and the first neural network data packet, and the first identification information and the second identification information are determined based on the first information. The communication interface 2110 is configured to send the first video frame data packet and the first neural network data packet.

In an implementation process, steps in the foregoing methods can be implemented by using a hardware integrated logical circuit in the processor 2120, or by using instructions in a form of software. The method of the communication disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 2130, and the processor 2120 reads information in the memory 2130 and completes the steps in the foregoing methods in combination with hardware of the processor 2120. To avoid repetition, details are not described herein again.

It should be understood that the processor in embodiments of this application may be a central processing unit (central processing unit, CPU), or may be another general purpose processor, a digital signal processor (digital signal processor, DSP), an application-specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should also be understood that in embodiments of this application, the memory may include a read-only memory and a random access memory, and provide instructions and data to the processor. A part of the processor may further include a non-volatile random access memory. For example, the processor may further store information in a device type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
receiving a first video frame data packet and a first neural network data packet, wherein the first neural network data packet is used to carry neural network parameter information, the neural network parameter information is used to process data of the first video frame data packet, the first video frame data packet comprises first identification information, the first neural network data packet comprises second identification information, and the first identification information and the second identification information each indicate a correspondence between the first video frame data packet and the first neural network data packet; and
sending the first video frame data packet and the first neural network data packet based on the first identification information and the second identification information.

2. The method according to claim 1, wherein the first identification information indicates a group of the first video frame data packet.

3. The method according to claim 1 or 2, wherein the second identification information indicates a group of the first neural network data packet.

4. The method according to any one of claims 1 to 3, wherein the first video frame data packet further comprises first type information, and the first type information indicates a type of the first video frame data packet; and
the sending the first video frame data packet and the first neural network data packet based on the first identification information and the second identification information comprises:
sending the first video frame data packet and the first neural network data packet based on the first identification information, the second identification information, and the first type information.

5. The method according to any one of claims 1 to 4, wherein the first neural network data packet further comprises second type information, and the second type information indicates a type of the first neural network data packet; and
the sending the first video frame data packet and the first neural network data packet based on the first identification information and the second identification information comprises:
sending the first video frame data packet and the first neural network data packet based on the first identification information, the second identification information, and the second type information.

6. The method according to any one of claims 1 to 5, wherein the first video frame data packet is carried on a first quality of service QoS flow; and
the first neural network data packet is carried on a second QoS flow.

7. The method according to any one of claims 1 to 6, wherein the sending the first video frame data packet and the first neural network data packet based on the first identification information and the second identification information comprises:
mapping, to a radio resource based on the first identification information and the second identification information, the data packets carried on the first QoS flow and the second QoS flow, and transmitting the data packets.

8. The method according to any one of claims 1 to 7, wherein the first video frame data packet and the first neural network data packet are general packet radio service tunneling protocol-user plane GTP-U data packets, and the first identification information and the second identification information are located in a GTP-U protocol of a packet header of the GTP-U data packet.

9. A data transmission method, comprising:
receiving a second video frame data packet and a second neural network data packet of an XR video, wherein the second video frame data packet and the second neural network data packet each comprise first information, and the first information indicates a type and a group of the second video frame data packet and a type and a group of the second neural network data packet;
generating a first video frame data packet and a first neural network data packet of the XR video, wherein the first neural network data packet is used to carry neural network parameter information, the neural network parameter information is used to process data of the first video frame data packet, the first video frame data packet comprises first identification information, the first neural network data packet comprises second identification information, the first identification information and the second identification information each indicate a correspondence between the first video frame data packet and the first neural network data packet, and the first identification information and the second identification information are determined based on the first information; and
sending the first video frame data packet and the first neural network data packet.

10. The method according to claim 9, wherein the first identification information indicates a group of the first video frame data packet.

11. The method according to claim 9 or 10, wherein the second identification information indicates a group of the first neural network data packet.

12. The method according to any one of claims 9 to 11, wherein the first video frame data packet further comprises first type information, and the first type information indicates a type of the first video frame data packet.

13. The method according to any one of claims 9 to 12, wherein the first neural network data packet further comprises second type information, and the second type information indicates a type of the first neural network data packet.

14. The method according to any one of claims 9 to 13, wherein the sending the first video frame data packet and the first neural network data packet comprises:
mapping the first video frame data packet to a first quality of service QoS flow based on the type of the second video frame data packet;
mapping the first neural network data packet to a second QoS flow based on the type of the second neural network data packet; and
sending the first QoS flow and the second QoS flow.

15. The method according to any one of claims 9 to 14, wherein the first video frame data packet and the first neural network data packet are general packet radio service tunneling protocol-user plane GTP-U data packets, and the first identification information and the second identification information are located in a GTP-U protocol of a packet header of the GTP-U data packet.

16. The method according to any one of claims 9 to 15, wherein the second video frame data packet is a real-time transport protocol RTP data packet, a user datagram protocol UDP data packet, or a first protocol layer data packet, and a first protocol layer is a protocol layer between an RTP and a UDP.

17. The method according to claim 16, wherein the second neural network data packet is an RTP data packet, a UDP data packet, or a first protocol layer data packet, and a first protocol layer is a protocol layer between an RTP and a UDP.

18. A data transmission apparatus, comprising:
an interface unit, configured to receive a first video frame data packet and a first neural network data packet, wherein the first neural network data packet is used to carry neural network parameter information, the neural network parameter information is used to process data of the video frame data packet, the first video frame data packet comprises first identification information, the first neural network data packet comprises second identification information, and the first identification information and the second identification information each indicate a correspondence between the first video frame data packet and the first neural network data packet; and
a processing unit, configured to control, based on the first identification information and the second identification information, the interface unit to send the first video frame data packet and the first neural network data packet.

19. The apparatus according to claim 18, wherein the first identification information indicates a group of the first video frame data packet.

20. The apparatus according to claim 18 or 19, wherein the second identification information indicates a group of the first neural network data packet.

21. The apparatus according to any one of claims 18 to 20, wherein the first video frame data packet further comprises first type information, and the first type information indicates a type of the first video frame data packet; and
controlling, based on the first identification information and the second identification information, the interface unit to send the first video frame data packet and the first neural network data packet comprises:
the processing unit is configured to control, based on the first identification information, the second identification information, and the first type information, the interface unit to send the first video frame data packet and the first neural network data packet.

22. The apparatus according to any one of claims 18 to 21, wherein the first neural network data packet further comprises second type information, and the second type information indicates a type of the first neural network data packet; and
controlling, based on the first identification information and the second identification information, the interface unit to send the first video frame data packet and the first neural network data packet comprises:
the processing unit is configured to control, based on the first identification information, the second identification information, and the second type information, the interface unit to send the first video frame data packet and the first neural network data packet.

23. The apparatus according to any one of claims 18 to 22, wherein the first video frame data packet is carried on a first quality of service QoS flow; and
the first neural network data packet is carried on a second QoS flow.

24. The apparatus according to any one of claims 18 to 23, wherein controlling, based on the first identification information and the second identification information, the interface unit to send the first video frame data packet and the first neural network data packet comprises:
the processing unit is configured to: map, to a radio resource based on the first identification information and the second identification information, the data packets carried on the first QoS flow and the second QoS flow, and transmit the data packets.

25. The apparatus according to any one of claims 18 to 24, wherein the first video frame data packet and the first neural network data packet are general packet radio service tunneling protocol-user plane GTP-U data packets, and the first identification information and the second identification information are located in a GTP-U protocol of a packet header of the GTP-U data packet.

26. A data transmission apparatus, comprising:
an interface unit, configured to receive a second video frame data packet and a second neural network data packet of an XR video, wherein the second video frame data packet and the second neural network data packet each comprise first information, and the first information indicates a type and a group of the second video frame data packet and a type and a group of the second neural network data packet; and
a processing unit, configured to generate a first video frame data packet and a first neural network data packet of the XR video, wherein the first neural network data packet is used to carry neural network parameter information, the neural network parameter information is used to process data of the first video frame data packet, the first video frame data packet comprises first identification information, the first neural network data packet comprises second identification information, the first identification information and the second identification information each indicate a correspondence between the first video frame data packet and the first neural network data packet, and the first identification information and the second identification information are determined based on the first information, wherein
the interface unit is configured to send the first video frame data packet and the first neural network data packet.

27. The apparatus according to claim 26, wherein the first identification information indicates a group of the first video frame data packet.

28. The apparatus according to claim 26 or 27, wherein the second identification information indicates a group of the first neural network data packet.

29. The apparatus according to any one of claims 26 to 28, wherein the first video frame data packet further comprises first type information, and the first type information indicates a type of the first video frame data packet.

30. The apparatus according to any one of claims 26 to 29, wherein the first neural network data packet further comprises second type information, and the second type information indicates a type of the first neural network data packet.

31. The apparatus according to any one of claims 26 to 30, wherein sending the first video frame data packet and the first neural network data packet comprises:
the processing unit is configured to map the first video frame data packet to a first quality of service QoS flow based on the type of the second video frame data packet;
the processing unit is configured to map the first neural network data packet to a second QoS flow based on the type of the second neural network data packet; and
the interface unit is configured to send the first QoS flow and the second QoS flow.

32. The apparatus according to any one of claims 26 to 31, wherein the first video frame data packet and the first neural network data packet are general packet radio service tunneling protocol-user plane GTP-U data packets, and the first identification information and the second identification information are located in a GTP-U protocol of a packet header of the GTP-U data packet.

33. The apparatus according to any one of claims 26 to 32, wherein the second video frame data packet is a real-time transport protocol RTP data packet, a user datagram protocol UDP data packet, or a first protocol layer data packet, and a first protocol layer is a protocol layer between an RTP and a UDP.

34. The apparatus according to claim 33, wherein the second neural network data packet is an RTP data packet, a UDP data packet, or a first protocol layer data packet, and a first protocol layer is a protocol layer between an RTP and a UDP.

35. A computer-readable medium, wherein the computer-readable medium stores program code, and when the computer program code is run on a computer, the computer is enabled to perform the method according to any one of claims 1 to 8 or claims 9 to 17.

36. A communication apparatus, comprising at least one processor, wherein the at least one processor is coupled to a memory, and is configured to read and execute instructions in the memory, to perform the method according to any one of claims 1 to 8 or claims 9 to 17.
